# EUROPEAN PATENT SPECIFICATION

(11) **EP 4 557 712 B1**
(45) Date of publication and mention of the grant of the patent: **03.06.2026**
(21) Application number: 23850234.8
(22) Date of filing: 12.06.2023
(51) Int. Cl.: H04M 1/03, H04M 1/02, G06F 1/16, H04M 1/18

(54) **FOLDABLE ELECTRONIC DEVICE**
FALTBARE ELEKTRONISCHE VORRICHTUNG
DISPOSITIF ÉLECTRONIQUE PLIABLE

(30) Priority: 05.08.2022 KR 20220097974; 09.08.2022 KR 20220099481
(43) Date of publication of application: 21.05.2025
(73) Proprietor: Samsung Electronics Co., Ltd., Suwon-si, Gyeonggi-do 16677 (KR)
(72) Inventor: HAN, Youngkyu, Suwon-si, Gyeonggi-do 16677 (KR)
(74) Representative: Appleyard Lees IP LLP
(86) International application number: PCT/KR2023/008028
(87) International publication number: WO 2024/029724

(56) References cited:
- EP-A1- 4 266 655
- WO-A1-2022/163993
- WO-A1-2022/169163
- KR-A- 20170 098 009
- KR-A- 20190 021 056
- KR-A- 20190 034 063
- KR-A- 20200 119 105

## Description

### [Technical Field]

Various embodiments disclosed in the disclosure relate to a foldable electronic device.

### [Background Art]

Remarkable developments in information communication, semiconductor technologies, and the like have allowed for the rapid spread and use of various electronic devices. Specifically, recent electronic devices have been developed to perform communication while being carried.

Such electronic devices may refer to devices performing a particular function according to an equipped program, such as a home appliance, an electronic scheduler, a portable multimedia player, a mobile communication terminal, a tablet PC, a video/sound device, a desktop PC or laptop computer, or a navigation for automobile. For example, such electronic devices may output stored information in the form of a sound or image. In line with the high degree of integration of electronic devices and the widespread use of super-fast large-capacity wireless communication, it has recently become possible to equip a single electronic device, such as, a mobile communication terminal, with various functions. For example, not only a communication function, but also an entertainment function such as gaming, a multimedia function such as music/video playback, communication and security functions for mobile banking, or functions such as a scheduling function and an electronic wallet function may be integrated into a single electronic device. Such electronic devices have become compact enough for users to carry in a convenient way.

As mobile communication services expand into multimedia service areas, the display size of electronic devices may be increased to allow users to fully utilize not only voice calls and short messages but also multimedia services. Accordingly, a foldable flexible display may be disposed on the entire area of a housing structure separated to be foldable. International patent publication no. WO2022/169163A1 (prior art under Article 54(3) EPC) discloses an electronic device comprising: a first housing structure including a first rear cover; a second housing structure which provides movement relative to the first housing structure; a hinge structure connecting the first housing structure and the second housing structure so as to be pivotable from a folded state to an unfolded state; a flexible display configured to be variable in response to a movement of the second housing structure relative to the first housing structure; and an acoustic component disposed in the first housing structure and configured to output and input sound. The first housing structure includes at least one opening, and a conduit extending from the acoustic component to the opening. The conduit includes a first conduit extending toward a first end of the first housing structure, a second conduit branching off from the first conduit and extending toward at least a partial area of the first rear cover, and a third conduit branching off from the first conduit and extending toward at least a partial area of the flexible display.

WO2022163993 discloses an electronic device comprises an acoustic waveguide, a first support plate for defining a part of the acoustic waveguide at one surface thereof, a first display arranged on the one surface of the first support plate, a second display arranged on the other surface of the first support plate, and a speaker module arranged on the other surface of the first support plate between the first support plate and the second display. The acoustic waveguide can be formed to radiate, from one side of the second display to an external space, a sound outputted from the speaker module.

### [Detailed Description of the Invention]

### [Technical Solution]

According to the invention, an electronic device includes a first housing including a first lateral surface, in which a plurality of first holes are formed, and a second lateral surface, in which plurality of second holes are formed, a second housing, a hinge structure rotatably connecting the first housing and the second housing, a flexible display disposed on the first housing and the second housing, a first waterproof member disposed between the first housing and the flexible display, an acoustic housing disposed in the first housing and including a conduit extending to at least a portion of the plurality of second holes, and a sound output module disposed in the acoustic housing and configured to output a sound to the outside of the electronic device through at least a portion of the plurality of second holes and the conduit, wherein the plurality of second holes include at least one sound emission hole extending from the second lateral surface to the conduit and at least one air hole disposed adjacent to the at least one sound emission hole and extending from the second lateral surface to a gap defined between the first waterproof member and the second lateral surface.

### [Brief Description of Drawings]

FIG. 1 is a block view illustrating an electronic device in a network environment according to various embodiments.
FIG. 2 is a view illustrating an unfolded status of an electronic device according to an embodiment of the disclosure.
FIG. 3 is a view illustrating a folded status of an electronic device according to an embodiment of the disclosure.
FIG. 4 is an exploded perspective view of an electronic device according to an embodiment of the disclosure.
FIG. 5 is a view illustrating a status in which a first housing, a second housing, and a waterproof member are coupled according to an embodiment of the disclosure.
FIG. 6 is a view illustrating a status in which a first housing, an acoustic housing, and a sealing member are coupled according to an embodiment of the disclosure.
FIG. 7 is a view illustrating a status in which a sealing member is coupled to a first housing according to an embodiment of the disclosure.
FIG. 8 is a view illustrating a status in which an acoustic housing and a sealing member are coupled according to an embodiment of the disclosure.
FIG. 9 is a perspective view illustrating a portion of a first housing having plurality of first holes formed therethrough according to an embodiment of the disclosure.
FIG. 10 is a sectional view illustrating a status in which a first housing, an acoustic housing, and a sealing member are coupled according to an embodiment of the disclosure.
FIG. 11A is a sectional view taken along line B-B' of FIG. 10 according to an embodiment of the disclosure.
FIG. 11B is a sectional view taken along line C-C' of FIG. 10 according to an embodiment of the disclosure.

### [Mode for Carrying out the Invention]

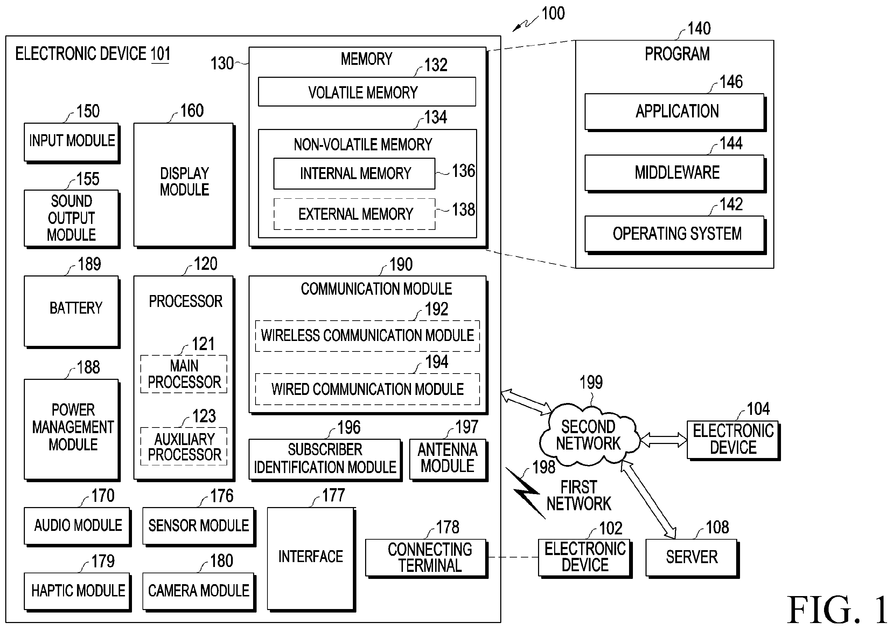

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

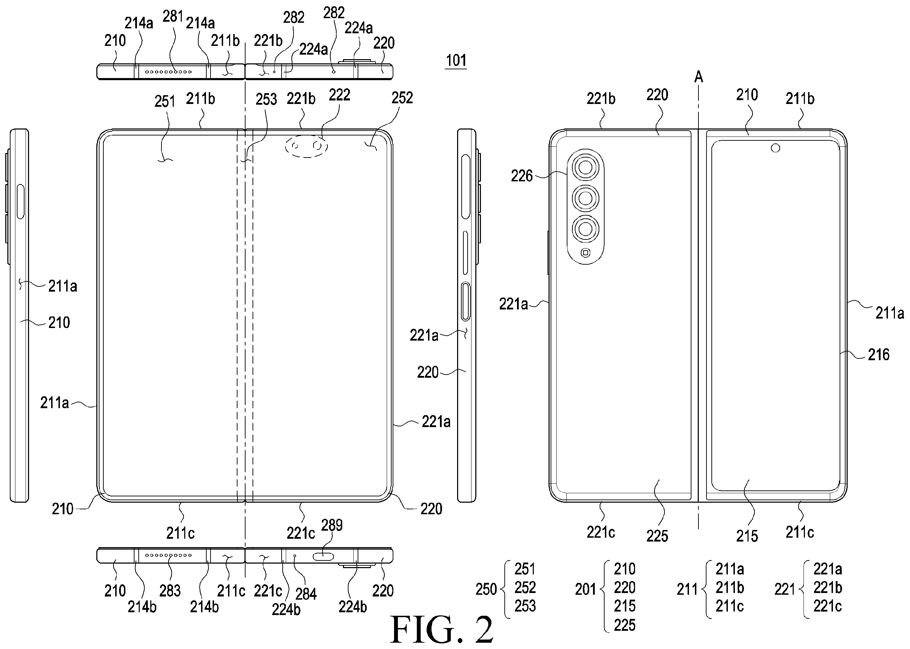

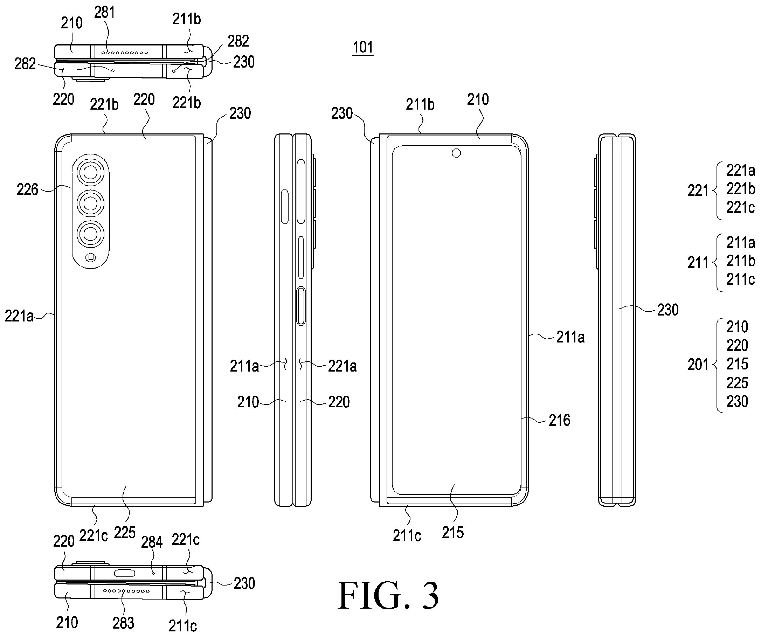

FIG. 2 is a view illustrating an unfolded status of an electronic device according to an embodiment of the disclosure. FIG. 3 is a view illustrating a folded status of an electronic device according to an embodiment of the disclosure.

FIG. 2 is a view illustrating an unfolded status among folding statuses of the electronic device (or a foldable electronic device) according to an embodiment of the disclosure. FIG. 3 is a view illustrating a folded status of the electronic device (or a foldable electronic device) according to an embodiment of the disclosure. The electronic device 101 of FIGS. 2 to 3 may be an embodiment of the electronic device 101 shown in FIG. 1 and may be a foldable (or bendable) electronic device.

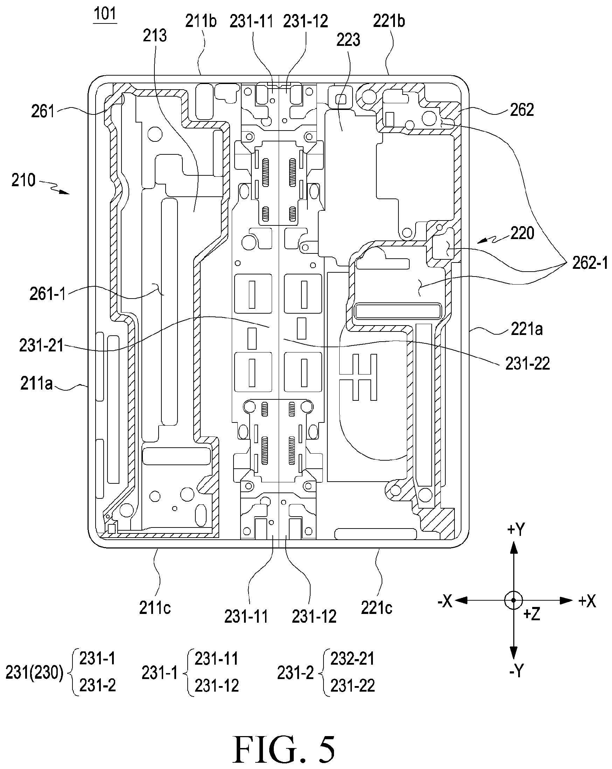

The embodiments in FIGS. 2 to 3 may be combined with the embodiment in FIG. 1 or the embodiments in FIGS. 5 to 11B.

The configuration of the electronic device 101 of FIGS. 2 to 3 may be entirely or partially identical to that of the electronic device 101 of FIG. 1.

Referring to FIG. 2 and FIG. 3, in an embodiment, the electronic device 101 may include a foldable housing 201, and a flexible or foldable display 250 (hereinafter, for short, "flexible display" 250) (e.g., the display device 160 in FIG. 1) disposed in a space configured by the foldable housing 201. According to embodiment, a surface on which the flexible display 250 is disposed (or a surface through which the flexible display 250 is exposed to the outside of the electronic device 101) may be defined as a front surface of the electronic device 101. The surface opposite the front surface may be defined as a rear surface of the electronic device 101. The surface surrounding a space between the front surface and the rear surface may be defined as a lateral surface of the electronic device 101.

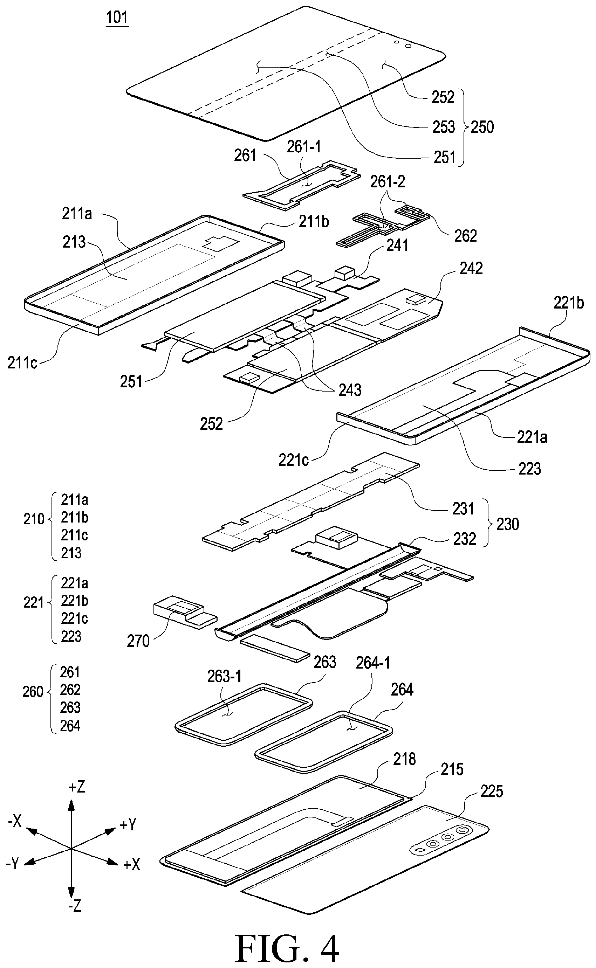

According to an embodiment, the foldable housing 201 may include a first housing 210, a second housing 220 including a sensor area 222, a first rear cover 215, a second rear cover 225, and a hinge assembly 230. According to an embodiment, the hinge assembly 230 may include a hinge cover (e.g., the hinge cover 232 in FIG. 4) configured to cover a foldable portion of the foldable housing 201. The foldable housing 201 of the electronic device 101 is not limited to the shape and combination shown in FIG. 2 and FIG. 3, and may be implemented by another shape or a combination and/or coupling of components. For example, in an embodiment, the first housing 210 and the first rear cover 215 may be integrally configured and the second housing 220 and the second rear cover 225 may be integrally configured.

According to an embodiment, the sensor area 222 may include an illuminance sensor and an image sensor disposed thereon. The illuminance sensor may detect a light amount around the electronic device 101 and the image sensor may convert light incident through a camera lens into a digital signal. The illuminance sensor and the image sensor may be visually exposed to the flexible display 250. According to an embodiment, the illuminance sensor and the image sensor may not be visually exposed. For example, a camera may include an under-display camera. A pixel of an area of the flexible display 250 corresponding to a location of the UDC may be configured to be different from that of another area and the image sensor and/or the camera may not be visually exposed.

According to an embodiment, the first housing 210 may be connected to the hinge assembly 230 and include a first front surface facing a first direction and a first rear surface facing a direction opposite the first direction. The second housing 220 may be connected to the hinge assembly 230 and include a second front surface facing a second direction and a second rear surface facing a direction opposite to the second direction. The first housing 210 may rotate around the hinge assembly 230 with respect to the second housing 220. The second housing 220 may rotate around the hinge assembly 230 with respect to the first housing 210. The electronic device 101 may vary into the folded status or the unfolded status.

According to an embodiment, the first housing 210 may include a (1-1)th lateral surface 211a disposed spaced apart from and parallel with a folding axis A of the hinge assembly 230 between the first front surface and the first rear surface, and the second housing 220 may include a (2-1)th lateral surface 221a disposed spaced apart from and parallel with the folding axis A of the hinge assembly 230 between the second front surface and the second rear surface. In addition, the first housing 210 may include a (1-2)th lateral surface 211b which is perpendicular to the (1-1)th lateral surface 211a and has one end connected to the (1-1)th lateral surface 211a and the other end connected to the hinge assembly 230, and a (1-3)th lateral surface 211c which is perpendicular to the (1-1)th lateral surface 211a, has one end connected to the (1-1)th lateral surface 211a and the other end connected to the hinge assembly 230, and is spaced apart in a parallel direction from the (1-2)th lateral surface 211b. The second housing 220 may include a (2-2)th lateral surface 221b which is perpendicular to the (2-1)th lateral surface 221a and has one end connected to the (2-1)th lateral surface 221a and the other end connected to the hinge assembly 230, and a (2-3)th lateral surface 221c which is perpendicular to the (2-1)th lateral surface 221a, has one end connected to the (2-1)th lateral surface 221a and the other end connected to the hinge assembly 230, and is spaced apart in a parallel direction from the (2-2)th lateral surface 221b. When the first housing 210 is folded with respect to the second housing 220 around the hinge assembly 230 (e.g., FIG. 3), the (1-1)th lateral surface 211a may be closer to the (2-1)th lateral surface 221a, and when the first housing 210 is unfolded with respect to the second housing 220 around the hinge structure 230 (e.g., FIG. 2), the (1-1)th lateral surface 211a may be farther away from the (2-1)th lateral surface 221a.

According to an embodiment, in the electronic device 101, the first front surface may face the second front surface in a fully folded status and the second direction may be identical to the first direction in a fully unfolded status. In the fully unfolded status, the distance between the (1-1)th lateral surface 211a and the (2-1)th lateral surface 221a may be configured to be longest.

According to an embodiment, the first housing 210 and the second housing 220 are arranged on opposite sides around the folding axis A-axis and have an overall symmetric shape with respect to the folding axis A. As described below, an angle and distance between the first housing 210 and the second housing 220 may vary according to whether a status of the electric device 101 is an unfolded status, a folded status, or partially unfolded (or partially folded) intermediate status.

According to an embodiment, as shown in FIG. 2, the first housing 210 and the second housing 220 may together configure a recess configured to receive the flexible display 250. According to an embodiment, at least a portion of the first housing 210 and the second housing 220 may be configured by a metal or non-metal material having selected strength for supporting the flexible display 250. At least a portion configured by the metal material may provide a ground plane for the electronic device 101 and may be electrically connected to a ground line formed on a printed circuit board disposed in the foldable housing 201.

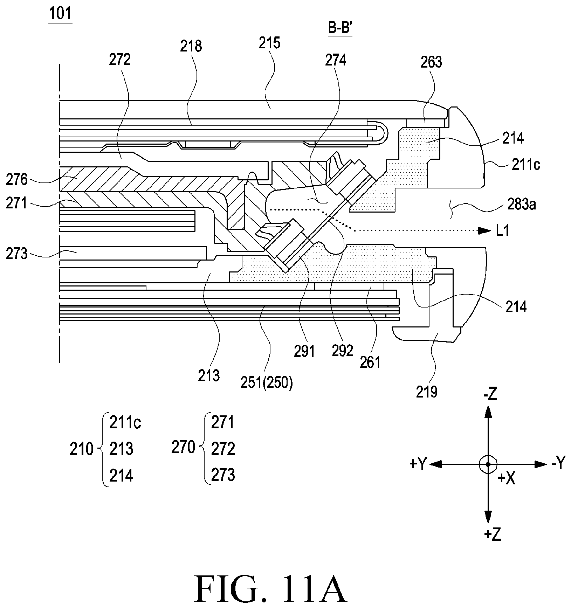

According to an embodiment, a protection member may be disposed on an edge of the flexible display 250. The protection member (e.g., the protection member 219 in FIGS. 11A to 11B) may be configured integrally with or separated from the lateral surface of the foldable housing 201. The flexible display 250 may not be adhered to the lateral surface of the foldable housing 201 and/or the protection member. A gap may be configured between the flexible display 250 and the protection member. The protection member may be configured to cover a component inside the electronic device 101 from the outside or protect a component inside the electronic device 101 from an external impact. According to an embodiment, the protection member may be configured to cover a wire mounted on the flexible display 250 or protect the wire from an external impact.

According to an embodiment, the first rear cover 215 may be disposed on one side of the folding axis A on the rear surface of the electronic device 101, and have, for example, a substantially rectangular periphery which may be surrounded by the first housing 210. Similarly, the second rear cover 225 may be disposed on the other side of the folding axis A on the rear surface of the electronic device 101, and may have a periphery surrounded by the second housing 220.

According to an embodiment, the first rear cover 215 and the second rear cover 225 may have substantially symmetrical shapes to each other with reference to the folding axis A. However, the first rear cover 215 and the second rear cover 225 do not necessarily have symmetric shapes and in other embodiments, the electronic device 101 may include the first rear cover 215 and the second rear cover 225 having various shapes. In another embodiment, the first rear cover 215 and the first housing 210 may be integrally configured and the second rear cover 225 and the second housing 220 may be integrally configured.

According to an embodiment, the first rear cover 215, the second rear cover 225, the first housing 210, and the second housing 220 may define a space in which various components (e.g., a printed circuit board or a battery) of the electronic device 101 may be arranged. According to an embodiment, one or more components may be arranged at or visually exposed through the rear surface of the electronic device 101. For example, at least a portion of a sub-display (e.g., the sub-display 218 in FIG. 4) may be visually exposed through a first rear area 216 of the first rear cover 215. For example, one or more components or sensors may be visually exposed through a second rear area 226 of the second rear cover 225. In an embodiment, the sensor may include a proximity sensor and/or a rear camera.

According to an embodiment, a front camera disposed on the front surface (e.g., the second front surface) of the electronic device 101 and the rear camera exposed through the second rear surface area 226 of the second rear cover 225 may include one or more lenses, an image sensor, and/or an image signal processor. The flash may include, for example, a light-emitting diode or a xenon lamp. In an embodiment, two or more lenses (infrared camera, wide-angle, and telephoto lenses) and image sensors may be arranged on one surface of the electronic device 101.

Referring to FIG. 3, the hinge cover (e.g., the hinge cover 232 in FIG. 4) included in the hinge assembly 230 may be disposed between the first housing 210 and the second housing 220 and configured to cover an internal component (e.g., the hinge structure 231 in FIG. 4). According to an embodiment, the hinge assembly 230 may be covered or exposed by a portion of the first housing 210 and the second housing 220 according to a status (the unfolded status, intermediate status, or folded status) of the electronic device 101.

According to an embodiment, as shown in FIG. 2, when the electronic device 101 is in the unfolded status (e.g., the fully unfolded status), the hinge assembly 230 may be covered by the first housing 210 and the second housing 220 not to be exposed. According to an embodiment, as shown in FIG. 3, in case that the electronic device 101 is in the folded status (e.g., the fully folded status), the hinge assembly 230 may be exposed to the outside between the first housing 210 and the second housing 220. For another example, in the case of the intermediate status in which the first housing 210 and the second housing 220 are folded with a certain angle, the hinge assembly 230 may be partially exposed to the outside between the first housing 210 and the second housing 220. In this case, the exposed area may be smaller than that of the fully folded status. In an embodiment, the hinge assembly 230 may include a curved surface.

According to an embodiment, the flexible display 250 may be disposed in a space configured by the foldable housing 201. For example, the flexible display 250 may be seated in a recess configured by the foldable housing 201 and exposed to the outside through the front surface (e.g., the first front surface and/or the second front surface) of the electronic device 101. According to an embodiment, the flexible display 250 may occupy substantially most of the front surface (e.g., the first front surface and/or the second front surface) of the electronic device 101. Accordingly, the front surface (e.g., the first front surface and/or the second front surface) of the electronic device 101 may include the flexible display 250, and a partial area of the first housing 210 and a partial area of the second housing 220 adjacent to the flexible display 250. In addition, the rear surface (e.g., the first rear surface and/or the second rear surface) of the electronic device 101 may include the first rear cover 215, a partial area of the first housing 210 adjacent to the first rear cover 215, the second rear cover 225, and a partial area of the second housing 220 adjacent to the second rear cover 225.

According to an embodiment, the flexible display 250 may be referred to as a display having at least a partial area transformable to a flat surface or a curved surface. According to an embodiment, the flexible display 250 may include a folding area 253, a first display area 251 disposed at one side (e.g., a left side of the folding area 253 shown in FIG. 2) with reference to the folding area 253, and a second display area 252 disposed at the other side (e.g., a right side of the folding area 253 shown in FIG. 2).

According to an embodiment, the first display area 251 may be disposed on the first housing 210 and the second display area 252 may be disposed on the second housing 220. According to an embodiment, the folding area 253 may connect the first display area 251 and the second display area 252 and may be disposed on the hinge assembly 230.

The division of areas in the flexible display 250 of FIG. 2 is exemplary and the display 250 may be divided into multiple areas (e.g., two or more than four) according to the structure or function thereof. For example, the area of the flexible display 250 may be divided by the folding area 253 extending parallel with the folding axis A in the embodiment shown in FIG. 2, and the area of the flexible display 250 may be divided with reference to another folding axis (e.g., the folding axis parallel with the width direction of the electronic device).

According to an embodiment, the flexible display 250 may be combined with or disposed adjacent to a touch panel including a touch sensing circuit and a pressure sensor capable of measuring a strength (pressure) of a touch. For example, the flexible display 250 may be coupled or disposed adjacent to a touch panel, for example, a touch panel configured to detect a stylus pen in an electromagnetic resonance (EMR) manner.

According to an embodiment, the first display 251 and the second display are 252 may have overall symmetrical shapes with respect to the folding area 253.

Hereinafter, the operation of the first housing 210 and the second housing 220 and each area of the flexible display 250 according to the status (e.g., the folded status, the unfolded status, or the intermediate status) of the electronic device 101 will be described.

According to an embodiment, in case that the electronic device 101 is in the unfolded status (e.g., FIG. 2), the first housing 210 and the second housing 220 may be arranged to have an angle of 180 degrees therebetween and face the same direction. The surface of the first display area 251 and the surface of the second display area 252 of the flexible display 250 may form an angle of 180 degrees therebetween and face the same direction (e.g., the front direction of electronic device). Here, the folding area 253 may configure the same plane with the first display area 251 and the second display area 252.

According to an embodiment, in case that the electronic device 101 is in the folded status (e.g., FIG. 3), the first housing 210 and the second housing 220 may be arranged to face each other. The surface of the first display area 251 and the surface of the second display area 252 of the flexible display 250 may have a narrow angle (e.g., between 0 degrees and 10 degrees) therebetween and face each other. At least a portion of the folding area 253 may be configured to be a curved surface having a certain curvature.

According to an embodiment, in case that the electronic device 101 is in the intermediate status, the first housing 210 and the second housing 220 may be arranged at a certain angle. The surface of the first display area 251 and the surface of the second display area 252 of the flexible display 250 may configure an angle therebetween larger than that of the folded status and smaller than that of the unfolded status. At least a portion of the folding area 253 may be configured to be a curved surface having a certain curvature, and in this case, the curvature may be smaller than that of the folded status.

According to an embodiment, the first housing 210 may include a first housing hole 281 or 283. According to an embodiment, the first housing hole 281 or 283 may include a (1-1)th housing hole 281 formed through the (1-2)th lateral surface 211b of the first housing 210 and a (1-2)th housing hole 283 formed through the (1-3)th lateral surface 211c of the first housing 210.

According to an embodiment, the (1-2)th lateral surface 211b of the first housing 210 may include a (1-1)th segment part 214a made of non-metal material. According to an embodiment, a pair of (1-1)th segment parts 214a may be provided to be spaced apart from each other. According to an embodiment, the (1-1)th housing hole 281 may be disposed between the pair of (1-1) segment parts 214a.

According to an embodiment, the (1-3)th lateral surface 211c of the first housing 210 may include a (1-2)th segment part 214b made of non-metal material. According to an embodiment, a pair of (1-2)th segment parts 214b may be provided to be spaced apart from each other. According to an embodiment, the (1-2)th housing hole 283 may be disposed between the pair of (1-2) segment parts 214b.

According to an embodiment, the number of at least one (1-1)th housing hole 281 may be identical to that of at least one (1-2)th housing hole 283.

According to an embodiment, the (1-2)th lateral surface 211b and the (1-3)th lateral surface 211c may be disposed to be parallel with each other. According to an embodiment, the multiple (1-1)th housing holes 281 and the multiple (1-2)th housing holes 283 may be arranged to overlap each other based on a longitudinal direction (e.g., the Y-axis direction in FIG. 4) of the electronic device 101. For example, each of the multiple (1-1)th housing holes 281 may be arranged to correspond to each of the multiple (1-2)th housing holes 283 in the longitudinal direction (e.g., the Y-axis direction in FIG. 4) of the electronic device 101.

According to an embodiment, the multiple (1-1)th housing holes 281 may be arranged on a straight line in a width direction (e.g., the X-axis direction in FIG. 4) of the electronic device 101 (or the first housing 210). According to an embodiment, the multiple (1-2)th housing holes 283 may be arranged on a straight line in a width direction (e.g., the X-axis direction in FIG. 4) of the electronic device 101 (or the first housing 210).

According to an embodiment, the second housing 220 may include a second housing hole 282 or 284. According to an embodiment, the second housing hole 282 or 284 may include a (2-1)th housing hole 282 formed through the (2-2)th lateral surface 221b of the second housing 220 and a (2-2)th housing hole 284 formed through the (2-3)th lateral surface 221c of the second housing 220.

According to an embodiment, the (2-2)th lateral surface 221b of the second housing 220 may include a (2-1)th segment part 224a made of non-metal material. According to an embodiment, a pair of (2-1)th segment parts 224a may be provided to be spaced apart from each other. According to an embodiment, a portion of the (2-1)th housing hole 282 may be disposed between the pair of (2-1)th segment parts 224a and the other portion of the (2-1)th housing hole 282 may be disposed between the folding axis A (or the hinge assembly 230) and the (2-1)th segment part 224a.

According to an embodiment, the (2-3)th lateral surface 221c of the second housing 220 may include a (2-2)th segment part 224b made of non-metal material. According to an embodiment, a pair of (2-2)th segment parts 224b may be provided to be spaced apart from each other. According to an embodiment, the (2-1)th housing hole 282 may be disposed between the pair of (2-2) segment parts 224b.

According to an embodiment, the (2-3)th lateral surface 221c of the second housing 220 may include a connection terminal 289 (e.g., the connection terminal 178 in FIG. 1).

In a description of drawings below, a spatial coordinate system defined by X-axis, Y-axis, and Z-axis orthogonal to each other will be illustrated. The X-axis may represent a width direction of the electronic device, the Y-axis may represent a length direction of the electronic device, and the Z-axis may represent a height (or thickness) direction of the electronic device. In describing an embodiment of the disclosure, "a first direction and a second direction" may mean a direction parallel with the Z-axis.

FIG. 4 is an exploded perspective view of an electronic device according to an embodiment of the disclosure.

The embodiment in FIG. 4 may be combined with the embodiments in FIGS. 1 to 3 or the embodiments in FIGS. 5 to 11B.

Referring to FIG. 4, the electronic device 101 (e.g., the electronic device 101 in FIGS. 1 to 3) may include a foldable housing 201, a first housing 210, a second housing 220, a hinge assembly 230, a flexible display 250, a first printed circuit board 241, a second printed circuit board 242, a first battery 251, a second battery 252, a waterproof member 260, and/or an acoustic housing 270.

The configuration of the foldable housing 201, the first housing 210, the second housing 220, the hinge assembly 230, and the flexible display 250 in FIG. 4 may be entirely or partially identical to that of the foldable housing 201, the first housing 210, the second housing 220, the hinge assembly 230, and the flexible display 250 in FIGS. 2 to 3.

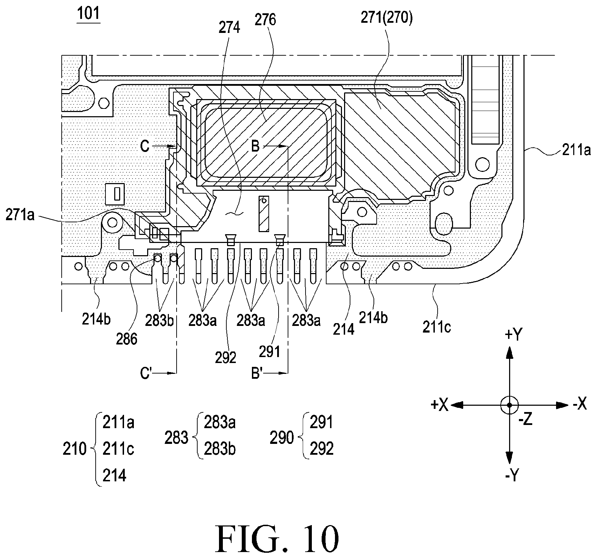

According to an embodiment, the electronic device 101 may include various electronic components (or electrical components) arranged inside and outside the first housing 210 and the second housing 220. The various electronic components may include, for example, a processor (e.g., the processor 120 in FIG. 1), memory (e.g., the memory 130 in FIG. 1), an input module (e.g., the input module 150 in FIG. 1), a sound output module (e.g., the sound output module 155 in FIG. 1 or the sound output module 276 in FIG. 10), a display 250 (e.g., the display module 160 in FIG. 1), an audio module (e.g., the audio module 170 in FIG. 1), a sensor (e.g., the sensor module 176 in FIG. 1), an interface (e.g., the interface 177 in FIG. 1), a connection terminal (e.g., the connection terminal 178 in FIG. 1 or the connection terminal 289 in FIG. 2), a haptic module (e.g., the haptic module 179 in FIG. 1), a camera module (e.g., the camera module 180 in FIG. 1), a power management module 188, a battery 251 and 252 (e.g., the battery 189 in FIG. 1), a communication module (e.g., the communication module 190 in FIG. 1), a subscriber identification module (e.g., the subscriber identification module 196 in FIG. 1), or an antenna module (e.g., the antenna module 197 in FIG. 1), and the electronic components may be appropriately sorted and arranged inside or outside the first housing 210 and the second housing 220. At least one (e.g., the connection terminal 178) of the components may be omitted from the electronic device 101 or one, or more components may be added to the electronic device. Alternatively, portions of the components may be integrated into one component.

According to an embodiment, the electronic device 101 as a foldable electronic device may include multiple batteries in order to feed power required for driving to electronic components or store power. For example, the first housing 210 and the second housing 220 may include a first battery 251 and a second battery 252 disposed therein, respectively.

According to an embodiment, the first housing 210 may include a (1-1)th lateral surface 211a (e.g., the (1-1)th lateral surface 211a in FIGS. 2 to 3), a (1-2)th lateral surface 211b (e.g., the (1-2)th lateral surface 211b in FIGS. 2 to 3), a (1-3)th lateral surface 211c (e.g., the (1-3)th lateral surface 211c in FIGS. 2 to 3), and/or a first plate 213.

According to an embodiment, the second housing 220 may include a (2-1)th lateral surface 221a (e.g., the (2-1)th lateral surface 221a in FIGS. 2 to 3), a (2-2)th lateral surface 221b (e.g., the (2-2)th lateral surface 221b in FIGS. 2 to 3), a (2-3)th lateral surface 221c (e.g., the (2-3)th lateral surface 221c in FIGS. 2 to 3), and/or a second plate 223.

According to an embodiment, the electronic device 101 as a foldable electronic device may include a first plate 213 and/or a second plate 223 configured to dispose components in the first housing 210 and the second housing 220, respectively. According to an embodiment, the first plate 213 may be interpreted as a partial configuration of the first housing 210 and the second plate 223 may be interpreted as a partial configuration of the second housing 220. According to an embodiment, the first plate 213 may be interpreted as a separate configuration from the first housing 210 and the second plate 223 may be interpreted as a separated configuration from the second housing 220. Various electronic components and/or the printed circuit board 241 or 242 may be disposed on the first plate 213 and/or the second plate 223. According to an embodiment, the first plate 213 and the first printed circuit board 241 may be disposed in the first housing 210, and the second plate 223 and the second circuit board 242 may be disposed in the second housing 220. The first plate 213 may include a first surface facing the first direction, and the second plate 223 may include a second surface facing the second direction. The first plate 213 and the second plate 223 may be folded or unfolded with respect to each other by the hinge structure 231 disposed to correspond to the folding area 253 of the flexible display 250 and disposed to face each other in the folded status, and disposed so that the first surface and the second surface thereof may face the same direction in the unfolded status.

According to an embodiment, the first printed circuit board 241 may be disposed in a first waterproof area 261-1 configured by the first waterproof member 261.

According to an embodiment, the flexible display 250 may be disposed in the first housing 210 and the second housing 220. According to an embodiment, the first display area 251 may be disposed on the first housing 210 (or the first plate 213) and the second display area 252 may be disposed on the second housing 220 (or the second plate 223). According to an embodiment, the folding area 253 may connect the first display area 251 and the second display area 252 and may be disposed on the hinge structure 231.

According to an embodiment, the first printed circuit board 241 may be disposed on a lower portion (the -Z-axis direction) of the first plate 213 and the second printed circuit board 242 may be disposed on a lower portion (the -Z-axis direction) of the second plate 223.

According to an embodiment, signals of the processor to implement various functions and operations of the electronic device 101 may be transferred to electronic components through various conductive lines 243 and/or connection members (connectors) disposed on the printed circuit board 241 or 242.

According to an embodiment, the foldable housing 201 may include a first housing 210, a second housing 220, a first rear cover 215, a second rear cover 225, and a hinge assembly 230.

According to an embodiment, the flexible display 250 may include a display panel. In an embodiment, the first plate 213 and the second plate 223 may be disposed between the display panel and the first printed circuit board 241 and the second printed circuit board 242. The hinge assembly 230 may be disposed between the first plate 223 and the second plate 223.

According to an embodiment, the electronic device 101 may further include a sub-display 218 (e.g., the display module 160 in FIG. 1) disposed between the first housing 210 and the first rear cover 215. According to an embodiment, the sub-display 218 may include a display panel. According to an embodiment, the sub-display 218 may be coupled to the first rear cover 215. According to an embodiment, the sub-display 218 may be coupled to the first printed circuit board 241. For example, the sub-display 218 may be visually exposed to the outside of the electronic device 101 through a first rear area (e.g., the first rear area 216 in FIG. 2) of the first rear cover 215.

According to an embodiment, the hinge assembly 230 may include a hinge structure 231 and a hinge cover 232. According to an embodiment, the hinge structure 231 may include a hinge module (e.g., the hinge module 231-1 in FIG. 5) and a hinge plate (e.g., the hinge plate 231-2 in FIG. 5). According to an embodiment, the hinge cover 232 may cover the hinge structure 231.

According to an embodiment, the first housing 210 and the second housing 220 may be connected so that the first housing 210 and the second housing 220 are relatively rotatable with respect to each other.

According to an embodiment, the electronic device 101 may include a first printed circuit board 241 and a second printed circuit board 242. The first printed circuit board 241 and the second printed circuit board 242 may be disposed in a space configured by the first plate 213, the second plate 223, the first housing 210, the second housing 220, the first rear cover 215, and the second rear cover 225. Components for implementing various functions of the electronic device 101 may be arranged on the first printed circuit board 241 and the second printed circuit board 242. According to an embodiment, the first printed circuit board 241 and the second printed circuit board 242 may include one from among a printed circuit board (PCB), a flexible printed circuit board (flexible PCB), or a rigid flexible PCB (RFPCB).

According to an embodiment, the first housing 210 and the second housing 220 may be assembled to be coupled to opposite sides of the hinge assembly 230 in a status in which the first plate 213 and the second plate 223 are coupled to the flexible display 250. For example, the first housing 210 may be slid to be coupled to one side of the hinge assembly 230, and the second housing 220 may be slid to be coupled to the other side of the hinge assembly 230.

According to an embodiment, the electronic device 101 may include the waterproof member 260 disposed inside the electronic device 101. According to an embodiment, the waterproof member 260 may include a first waterproof member 261, a second waterproof member 262, a third waterproof member 263, and/or a fourth waterproof member 264.

According to an embodiment, the first waterproof member 261 may be disposed between the first housing 210 and the flexible display 250. According to an embodiment, the first waterproof member 261 may be disposed between the first plate 213 and the first display area 251. According to an embodiment, the first waterproof member 261 may be configured by a waterproof tape. According to an embodiment, the first waterproof member 261 may be adhered to the first housing 210 and/or the first plate 213 and may be adhered to the flexible display 250 (e.g., the first display area 251). According to an embodiment, the first waterproof member 261 may include a closed loop shape. For example, the first waterproof member 261 may include one or more closed loop areas. According to an embodiment, the first waterproof member 261 may include a waterproof tape and the first waterproof member 261 may restrict liquid inflow into the closed loop areas from outside the closed loop areas.

According to an embodiment, the first waterproof member 261 may include at least one first waterproof area 261-1. According to an embodiment, the at least one first waterproof area 261-1 may be defined and interpreted as an inside of the closed loop areas of the first waterproof member 261.

According to an embodiment, the second waterproof member 262 may be disposed between the second housing 220 and the flexible display 250. According to an embodiment, the second waterproof member 262 may be disposed between the second plate 223 and the second display area 252. According to an embodiment, the second waterproof member 262 may be configured by a waterproof tape. According to an embodiment, the second waterproof member 262 may be adhered to the second housing 220 and/or the second plate 223 and may be adhered to the flexible display 250 (e.g., the second display area 252). According to an embodiment, the second waterproof member 262 may include a closed loop shape. For example, the second waterproof member 262 may include one or more closed loop areas. According to an embodiment, the second waterproof member 262 may include a waterproof tape and the second waterproof member 262 may restrict liquid inflow into the closed loop areas from outside the closed loop areas.

According to an embodiment, the second waterproof member 262 may include at least one second waterproof area 262-1. According to an embodiment, the at least one second waterproof area 262-1 may be defined and interpreted as an inside of the closed loop areas of the second waterproof member 262.

According to an embodiment, the third waterproof member 263 may be disposed between the first housing 210 and the first rear cover 215. According to an embodiment, the third waterproof member 263 may be disposed between the first plate 213 and the sub-display 218. According to an embodiment, the third waterproof member 263 may be configured by a waterproof tape. According to an embodiment, the third waterproof member 263 may be adhered to the first housing 210 and/or the first plate 213 and may be adhered to the first rear cover 215 and/or the sub-display 218. According to an embodiment, the third waterproof member 263 may include a closed loop shape. For example, the third waterproof member 263 may include one or more closed loop areas. According to an embodiment, the third waterproof member 261 may include a waterproof tape and the third waterproof member 261 may restrict liquid inflow into the closed loop areas from outside the closed loop areas.

According to an embodiment, the third waterproof member 263 may include at least one third waterproof area 263-1. According to an embodiment, the at least one third waterproof area 263-1 may be defined and interpreted as an inside of the closed loop areas of the third waterproof member 263.

According to an embodiment, the fourth waterproof member 264 may be disposed between the second housing 220 and the second rear cover 225. According to an embodiment, the fourth waterproof member 264 may be disposed between the second plate 223 and the second rear cover 225. According to an embodiment, the fourth waterproof member 264 may be configured by a waterproof tape. According to an embodiment, the fourth waterproof member 264 may be adhered to the second housing 220 and/or the second plate 223 and may be adhered to the second rear cover 215. According to an embodiment, the fourth waterproof member 264 may include a closed loop shape. For example, the fourth waterproof member 264 may include one or more closed loop areas. According to an embodiment, the fourth waterproof member 264 may include a waterproof tape and the fourth waterproof member 264 may restrict liquid inflow into the closed loop areas from outside the closed loop areas.

According to an embodiment, the fourth waterproof member 264 may include at least one fourth waterproof area 264-1. According to an embodiment, the at least one fourth waterproof area 264-1 may be defined and interpreted as an inside of the closed loop areas of the fourth waterproof member 264.

According to an embodiment, the first waterproof member 261, the second waterproof member 262, the third waterproof member 263, and the fourth waterproof member 264 may be arranged not to be in contact with the hinge assembly 230.

According to an embodiment, as the waterproof member 260 is disposed inside the electronic device 101, the electronic device 101 may restrict liquid inflow into the inside of the electronic device 101 from the outside of the electronic device 101.

According to an embodiment, the electronic device 101 may include the acoustic housing 270 coupled to the first plate 213. According to an embodiment, the acoustic housing 270 may include a sound output module (e.g., the sound output module 155 in FIG. 1 or the sound output module 276 in FIG. 10) disposed therein.

According to an embodiment, the acoustic housing 270 may be disposed between the first plate 213 and the first rear cover 215. According to an embodiment, the acoustic housing 270 may be disposed adjacent to an inner wall of the (1-3)th lateral surface 211c.

According to an embodiment, the sound output module disposed inside the acoustic housing 270 may output a sound to the outside of the electronic device 101 through at least a portion (e.g., the sound emission hole 283a in FIG. 10) of a conduit (e.g., the conduit 274 in FIG. 10) of the acoustic housing 270 and a second housing hole (e.g., the second housing hole 283 in FIGS. 2 to 3) disposed through the (1-3) lateral surface 211c.

FIG. 5 is a view illustrating a status in which a first housing, a second housing, and a waterproof member are coupled according to an embodiment of the disclosure.

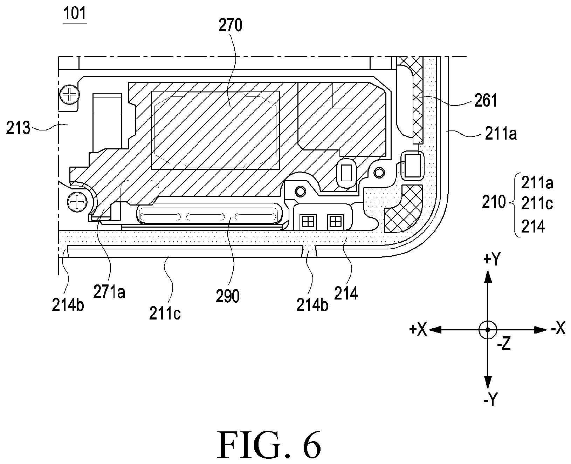

The embodiment in FIG. 5 may be combined with the embodiments in FIGS. 1 to 4 or the embodiments in FIGS. 6 to 11B.

Referring to FIG. 5, the electronic device 101 (e.g., the electronic device 101 in FIGS. 1 to 4) may include a first housing 210, a second housing 220, a hinge assembly 230, and/or a waterproof member 260.

The configuration of the first housing 210, the second housing 220, the hinge assembly 230, and/or the waterproof member 260 in FIG. 5 may be entirely or partially identical to that of the first housing 210, the second housing 220, the hinge assembly 230, and/or the waterproof member 260 in FIG. 4.

According to an embodiment, the first housing 210 (e.g., the first housing 210 in FIG. 4) may include a first plate 213 (e.g., the first plate 213 in FIG. 4), a (1-1)th lateral surface 211a (e.g., the (1-1)th lateral surface 211a in FIGS. 2 to 3), a (1-2)th lateral surface 211b (e.g., the (1-2)th lateral surface 211b in FIGS. 2 to 3), and/or a (1-3)th lateral surface 211c (e.g., the (1-3)th lateral surface 211c in FIGS. 2 to 3).

According to an embodiment, the second housing 220 (e.g., the second housing 210 in FIG. 4) may include a second plate 223 (e.g., the second plate 223 in FIG. 4), a (2-1)th lateral surface 221a (e.g., the (2-1)th lateral surface 221a in FIGS. 2 to 3), a (2-2)th lateral surface 221b (e.g., the (2-2)th lateral surface 221b in FIGS. 2 to 3), and/or a (2-3)th lateral surface 221c (e.g., the (2-3)th lateral surface 221c in FIGS. 2 to 3).

According to an embodiment, the hinge assembly 230 (e.g., the hinge assembly 230 in FIG. 4) may include a hinge structure 231 and a hinge cover (e.g., the hinge cover 232 in FIG. 4). According to an embodiment, the hinge structure 231 may include a hinge module 231-1 and a hinge plate 231-2. According to an embodiment, the hinge module 231-1 may be disposed at opposite ends in a longitudinal direction (e.g., the Y-axis direction in FIG. 5) of the hinge plate 231-2. According to an embodiment, the hinge module 231-1 may include a first hinge module 231-11 and a second hinge module 231-12. According to an embodiment, the first hinge module 231-11 may be disposed on a left side (e.g., the -X direction in FIG. 5) based on a folding axis (e.g., the folding axis A in FIG. 2), and the second hinge module 231-12 may be disposed on a right side (e.g., the +X direction in FIG. 5) based on the folding axis. According to an embodiment, the first hinge module 231-11 may be connected to the first housing 210 and/or the first plate 213, and the second hinge module 231-12 may be connected to the second housing 220 and/or the second plate 223. According to an embodiment, the first hinge module 231-11 and the second hinge module 231-12 may be connected to each other and may be capable of rotational movement relative to each other. According to an embodiment, the hinge plate 231-2 may include a first hinge plate 231-21 and a second hinge plate 231-22. According to an embodiment, the first hinge plate 231-21 may be disposed on a left side (e.g., the -X direction in FIG. 5) based on the folding axis (e.g., the folding axis A in FIG. 2), and the second hinge plate 231-22 may be disposed on a right side (e.g., the +X direction in FIG. 5) based on the folding axis. According to an embodiment, the first hinge plate 231-21 may be connected to the first housing 210 and/or the first plate 213, and the second hinge plate 231-22 may be connected to the second housing 220 and/or the second plate 223. According to an embodiment, the first hinge plate 231-21 may be connected to the first hinge module 231-11, and the second hinge module 231-22 may be connected to the second hinge module 231-12. According to an embodiment, the first hinge plate 231-21 and the second hinge plate 231-22 may be connected to each other and may be capable of rotational movement relative to each other. According to some embodiments, the first hinge plate 231-21 and the second hinge plate 231-22 may not be connected to each other. According to an embodiment, the hinge module 231-1 and the hinge plate 231-2 may include various configuration required for the operation of the electronic device 101 and/or a substrate.

According to an embodiment, the first waterproof member 261 may be disposed between the first housing 210 and the flexible display (e.g., the flexible display 250 in FIG. 4), and the second waterproof member 262 may be disposed between the second housing 220 and the flexible display (e.g., the flexible display 250 in FIG. 4).

According to an embodiment, the first waterproof member 261 may be disposed to configure a closed loop, and at least one first waterproof area 261-1 surrounded by the closed loop of the first waterproof member 261 may be configured. According to an embodiment, the first waterproof member 611 may include a waterproof tape and may be adhered to the first housing 210 and/or the flexible display (e.g., the flexible display 250 in FIG. 4). According to an embodiment, the first waterproof member 261 may be adhered to the first plate 213 of the first housing 210 and the first display area (e.g., the first display area 251 in FIG. 4) of the flexible display. According to an embodiment, the first waterproof member 611 may restrict liquid and/or foreign substances from entering the inner space (e.g., the first waterproof area 261-1) of the electronic device 101 from outside the electronic device 101. According to an embodiment, the first waterproof member 261 may be spaced apart from the hinge assembly 230 and regardless of the folding status (e.g., the folded status or the unfolded status) of the electronic device 101, may maintain the adhesion retention with the first housing 210 and the flexible display.

According to an embodiment, the second waterproof member 261 may be disposed to configure a closed loop, and at least one second waterproof area 262-2 surrounded by the closed loop of the second waterproof member 262 may be configured. According to an embodiment, the second waterproof member 611 may include a waterproof tape and may be adhered to the second housing 220 and/or the flexible display (e.g., the flexible display 250 in FIG. 4). According to an embodiment, the second waterproof member 262 may be adhered to the second plate 223 of the second housing 220 and the second display area (e.g., the second display area 252 in FIG. 4) of the flexible display. According to an embodiment, the second waterproof member 262 may restrict liquid and/or foreign substances from entering the inner space (e.g., the second waterproof area 261-2) of the electronic device 101 from outside the electronic device 101. According to an embodiment, the second waterproof member 262 may be spaced apart from the hinge assembly 230 and regardless of the folding status (e.g., the folded status or the unfolded status) of the electronic device 101, may maintain the adhesion retention with the second housing 220 and the flexible display.

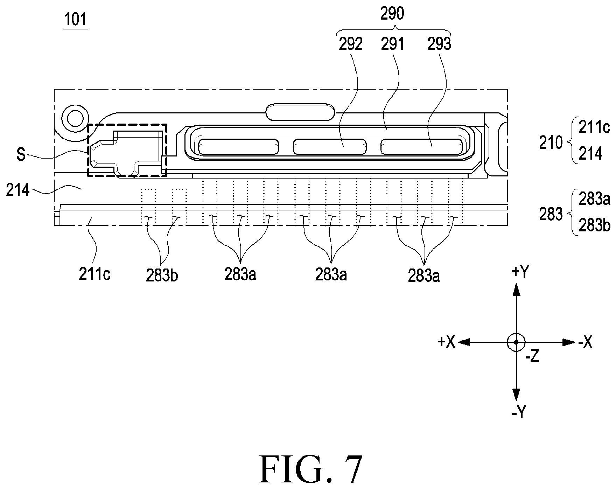

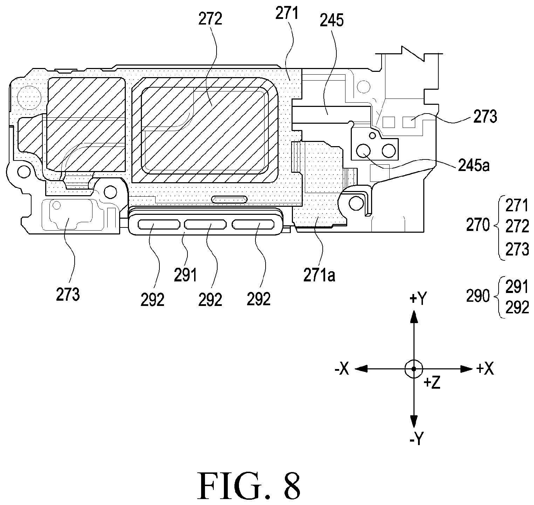

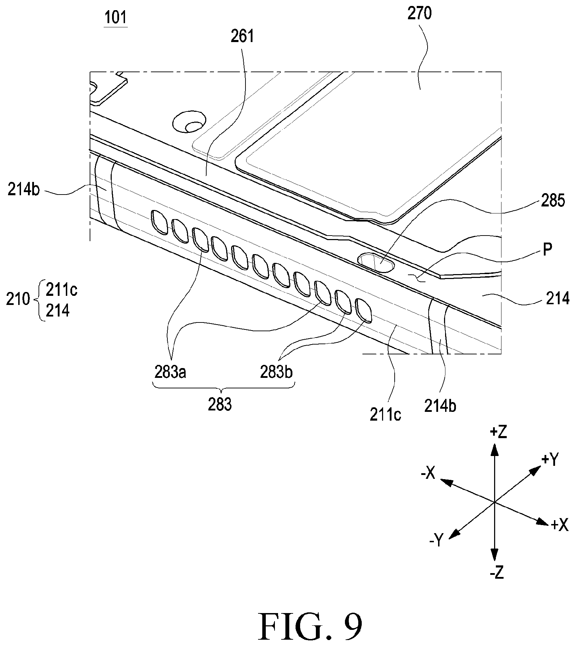

FIG. 6 is a view illustrating a status in which a first housing, an acoustic housing, and a sealing member are coupled according to an embodiment of the disclosure. FIG. 7 is a view illustrating a status in which a sealing member is coupled to a first housing according to an embodiment of the disclosure. FIG. 8 is a view illustrating a status in which an acoustic housing and a sealing member are coupled according to an embodiment of the disclosure. FIG. 9 is a perspective view illustrating a portion of a first housing having plurality of first holes disposed therethrough according to an embodiment of the disclosure.

The embodiments in FIGS. 6 to 9 may be combined with the embodiments in FIGS. 1 to 5 or the embodiments in FIGS. 10 to 11B.

Referring to FIGS. 6 to 9, the electronic device 101 (e.g., the electronic device 101 in FIGS. 1 to 5) may include a first housing 210, a first waterproof member 261, an acoustic housing 270, and a sealing member 290.

The configuration of the first housing 210 and the first waterproof member 261 in FIGS. 6 to 9 may be partially or entirely identical to that of the first housing 210 and the first waterproof member 261 in FIGS. 4 to 5. The configuration of the acoustic housing 270 in FIGS. 6 to 9 may be entirely or partially identical to that of the acoustic housing 270 in FIG. 4.

Referring to FIG. 6, the first housing 210 (e.g., the first housing 210 in FIGS. 2 to 5) may include a (1-1)th lateral surface 211a (e.g., the (1-1)th lateral surface 211a in FIG. 2 to 5), a (1-3)th lateral surface 211c (e.g., the (1-3)th lateral surface 211c in FIGS. 2 to 5), and/or a first plate 213 (e.g., the first plate 213 in FIGS. 4 or 5).

According to an embodiment, the first housing 210 may further include a non-metal area 214. According to an embodiment, the non-metal area 214 may be made of a non-metal material (e.g., polymer). According to an embodiment, a portion of the non-metal area 214 may configure a pair of (1-2)th segments parts 214b (e.g., the (1-2)th segment parts 213b in FIGS. 2 to 3).

According to an embodiment, the non-metal area 214 may configure the first housing 210 together with a metallic area of the first housing 210 through injection molding. According to an embodiment, at least a portion of the non-metal area 214 may configure at least a portion of the first plate 213. According to an embodiment, at least a portion of the non-metal area 214 may configure at least a portion of the (1-3)th lateral surface 211c. In an embodiment, at least a portion of the non-metal area 214 may be defined and interpreted to configure at least a portion of an inner wall of the (1-3)th lateral surface 211c.

According to an embodiment, the acoustic housing 270 may be coupled to the first plate 213. According to an embodiment, the first display area (e.g., the first display area 251 in FIG. 4) may be disposed on one surface (a surface facing the +Z direction in FIG. 4) of the first plate 213, and the acoustic housing 270 may be disposed on the other surface (e.g., a surface facing the -Z direction in FIG. 4) of the first plate 213.

According to an embodiment, the acoustic housing 270 may be disposed between the other surface (e.g., the surface facing the -Z direction in FIG. 4) of the first plate 213 and the first rear cover (e.g., the first rear cover 215 in FIG. 4).

According to an embodiment, the acoustic housing 270 may include a sound output module (e.g., the sound output module 155 in FIG. 1 or the sound output module 276 in FIG. 10) disposed therein.

According to an embodiment, the acoustic housing 270 may be defined or referred to as a cover configured to protect the sound output module. According to an embodiment, the acoustic housing 270 may be configured to provide a resonance space for a sound (or acoustics) generated from the sound output module. In addition, the sound generated from the sound output module may be output to the outside of the electronic device 101 through a conduit (e.g., the conduit 274 in FIG. 10) disposed inside the acoustic housing 270 and at least a portion (e.g., the sound emission hole 283a in FIG. 7) of a (1-2)th housing hole (e.g., the (1-2)th housing hole 283 in FIG. 2 or the (1-2)th housing hole 283 in FIG. 7).

According to an embodiment, the acoustic housing 270 may be disposed adjacent to an inner wall of the (1-3)th lateral surface 211c.

According to an embodiment, the first waterproof member 261 may adhere at least a portion of the one surface (e.g., the surface facing the +Z direction in FIG. 4) of the first plate 213 to the first display area. In addition, the first waterproof member 261 may block external foreign substances from entering the inside of the electronic device 101 from the outside of the electronic device 101. For example, the first waterproof member 261 may block an external foreign substance from entering at least one electrical component (e.g., the first battery 251 or the first printed circuit board 241 in FIG. 4) disposed inside the first waterproof area (e.g., the first waterproof area 261-1 in FIG. 5).

According to an embodiment, the electronic device 101 may further include a sealing member 290. According to an embodiment, the sealing member 290 may be disposed between the first housing 210 and the acoustic housing 270. According to an embodiment, the sealing member 290 may be disposed between the acoustic housing 270 and the (1-3)th lateral surface 211c of the first housing 210. According to an embodiment, the sealing member 290 may cover the conduit (e.g., the conduit 274 in FIG. 10) of the acoustic housing 270 and the sound emission hole (e.g., the sound emission hole 283a in FIG. 7) of the first housing 210 (of the (1-3)th lateral surface 211c). According to an embodiment, the sealing member 290 may be in contact with the acoustic housing 270 and the (1-3)th lateral surface 211c. According to an embodiment, the sealing member 290 may seal a space between the conduit (e.g., the conduit 274 in FIG. 10) and the sound emission hole (e.g., the sound emission hole 283a in FIG. 7). Accordingly, a sound output from the sound output module (e.g., the sound output module 276 in FIG. 10) may not leak to another space of the electronic device 101 between the conduit and the sound emission hole. According to an embodiment, the sealing member 290 may include a rubber material.

Referring to FIG. 7, according to an embodiment, multiple (1-2)th housing holes 283 may be configured and the multiple (1-2)th housing holes 283 may be aligned and arranged in the width direction (e.g., the +X-axis direction in FIG. 7) of the electronic device 101. For example, the multiple (1-2)th housing holes 283 may be arranged on a straight line. In an embodiment, the (1-2)th housing hole 283 may be disposed between the pair of (1-2) segment parts 214b (e.g., the pair of (1-2)th segment parts 214b in FIG. 6).

According to an embodiment, the (1-2)th housing hole 283, that is the (1-2)th housing hole 283 disposed through the (1-3)th lateral surface 211c may include at least one sound emission hole 283a and at least one air hole 283b.

According to an embodiment, the at least one sound emission hole 283a and the at least one air hole 283b may be spaced apart in the width direction (e.g., the X-axis direction in FIG. 7) of the electronic device 101.

According to an embodiment, the at least one sound emission hole 283a may correspond to a hole extending through the outer wall to the inner wall of the (1-3)th lateral surface 211c.

According to an embodiment, the at least one sound emission hole 283a may configure a passage through which a sound generated from the sound output module (e.g., the sound output module 276 in FIG. 10) is output to the outside of the electronic device 101.

According to an embodiment, at least a portion (e.g., a portion facing the inside of the electronic device 101) of the at least one sound emission hole 283a may be covered by the sealing member 290.

According to an embodiment, the at least one air hole 283b may be disposed adjacent to the at least one sound emission hole 283a. According to an embodiment, the at least one air hole 283b may correspond to a hole extending through the outer wall of the (1-3)th lateral surface 211c to at least a portion of the non-metal area 214. According to an embodiment, the at least one air hole 283b may correspond to a hole extending to the non-metal area 214 disposed between the (1-3)th lateral surface 211c and at least a portion of the first waterproof member 261 of the electronic device 101. A detailed description thereof will be given below.

According to an embodiment, the sealing member 290 may include a body member 291, a mesh member 292, and a seating member 293.

According to an embodiment, the body member 291 may be configured to have a rectangular shape to cover the at least one sound emission hole 283a. According to an embodiment, the body member 291 may have at least one opening. According to an embodiment, the mesh member 292 may be disposed in each of the at least one opening. According to an embodiment, the body member 291 may be configured to be coupled to the acoustic housing 270 and the (1-3)th lateral surface 211c of the first housing 210.

According to an embodiment, the mesh member 292 may include a mesh made of breathable material. According to an embodiment, the mesh member 292 may restrict liquid and/or foreign substances from entering the conduit (e.g., the conduit 274 in FIG. 10) of the acoustic housing 270. For example, the mesh member 292 may prevent liquid and/or foreign substances of the outside of the electronic device 101 from entering the conduit (e.g., the conduit 274 in FIG. 10) of the acoustic housing 270 through the sound emission hole 283a.

According to an embodiment, the seating member 293 may correspond to a portion extending outward from the outer surface of the body member 291. According to an embodiment, the seating member 293 may be configured to have a shape corresponding to a recess disposed on the (1-3)th lateral surface 211c or a recess disposed on the acoustic housing 210. According to an embodiment, the seating member 293 may be coupled to a seating structure disposed on the (1-3)th lateral surface 211c or a seating structure disposed on the acoustic housing 210.

According to an embodiment, the sealing member 290 may connect the conduit (e.g., the conduit 274 in FIG. 10) of the acoustic housing 270 and the sound emission hole 283a of the (1-3)th lateral surface 211c through the mesh member 292. According to an embodiment, the body member 291 or the seating member 293 is in close contact with an inner wall surface of the (1-3)th lateral surface 211c and the acoustic housing 270 so that the conduit (e.g., the conduit 274 in FIG. 10) of the acoustic housing 270 is not connected to the air hole 283b and a separated area (or space) may be configured therebetween.

According to an embodiment, the number of multiple (1-2)th housing holes 283 including the at least one sound emission hole 283a and the at least one air hole 283b may be identical to that of multiple (1-1)th housing holes (e.g., the first housing holes 281 in FIG. 2) formed through the (1-2)th lateral surface (e.g., the (1-2)th lateral surface 211b in FIG. 2), without limitation thereto. According to an embodiment, the multiple (1-1)th housing holes and the multiple (1-2)th housing holes 283 may be disposed at positions corresponding to each other. For example, spaced distances between the multiple (1-1)th housing holes with respect to the (1-1)th lateral surface 211a in the width direction (e.g., the X-axis direction in FIG. 7) of the electronic device 101 may be substantially identical to those between the multiple (1-2)th housing holes 283 with respect to the (1-1)th lateral surface 211a in the width direction of the electronic device 101. According to an embodiment, the (1-2)th lateral surface (e.g., the (1-2)th lateral surface 211b in FIGS. 2 to 4) and the (1-3)th lateral surface 211c may be disposed to be parallel with each other. According to an embodiment, the multiple (1-1)th housing holes (e.g., the (1-1)th housing holes 281 in FIGS. 2 to 3) and the multiple (1-2)th housing holes 283 may be arranged to overlap each other based on a longitudinal direction (e.g., the Y-axis direction in FIG. 7) of the electronic device 101. For example, each of the multiple (1-1)th housing holes (e.g., the (1-1)th housing holes 281 in FIGS. 2 to 3) may be arranged to correspond to each of the multiple (1-2)th housing holes 283 in the longitudinal direction (e.g., the Y-axis direction in FIG. 7) of the electronic device 101.

According to an embodiment, the multiple (1-2)th housing holes 283 may be arranged on a straight line in a width direction (e.g., the X-axis direction in FIG. 4) of the electronic device 101 (or the first housing 210). [160] According to an embodiment, the sealing member 290 may be disposed to cover the sound emission hole 283a and not to cover the air hole 283b. According to an embodiment, as the sealing member 290 does not cover the air hole 283b, a free space S adjacent to the inner wall of the (1-3)th lateral surface 211c may be configured inside the electronic device 101. The free space S may not be occupied by the sealing
member 290 and may be provided as a space for other components.

According to an embodiment, the free space S may be occupied by at least a portion (e.g., 271a in FIG. 6) of the acoustic housing 270.

For example, in case that the air hole 283b is covered by the sealing member 290, the free space S may not be configured inside the electronic device 101. According to an embodiment, as the sealing member 290 has a position and a size to not cover the air hole 283b, the electronic device 101 may have the free space S adjacent to a portion corresponding to the air hole 283b of the inner wall of the (1-3)th lateral surface 211c.

According to an embodiment, the electronic device 101 has a structure to allow at least a portion (e.g., 271a in FIG. 6) of the acoustic housing 270 to be disposed in the free space S, improving the output function of the sound output module.

For example, in case that the free space S is not configured since the sealing member 290 covers the air hole 283b, the overall size (or volume) of the acoustic housing 270 may not be secured as much as the volume of the free space S. In comparison, the electronic device 101 according to an embodiment of the disclosure may include the acoustic housing 270 of which the overall size (or volume) may extend to the free space S and compared to the aforementioned case, the performance of the sound output from the sound output module may be improved by configuring a wider (or larger) sound resonance space inside the acoustic housing 270.

According to an embodiment, a sensor module (e.g., the sensor module 176 in FIG. 1) may be disposed in the free space S.

Referring to FIG. 8, the acoustic housing 270 may include a first acoustic housing 271, a second acoustic housing 272, and a third acoustic housing 273.

According to an embodiment, the first acoustic housing 271 may include a sound output module (e.g., the sound output module 155 in FIG. 1 or the sound output module 276 in FIG. 10) disposed therein. According to an embodiment, the first acoustic housing 271 may be made of a non-metal material (e.g., polymer) but is not limited thereto. According to an embodiment, the conduit (e.g., the conduit 274 in FIG. 10) configured to configure a passage of a sound output from the sound output module may be disposed inside the first acoustic housing 271.

According to an embodiment, the sealing member 290 may be coupled to at least a portion of the first acoustic housing 271. For example, the sealing member 290 may be coupled to the first acoustic housing 271 to cover the conduit of the first acoustic housing 271.

According to an embodiment, the first acoustic housing 271 may have at least a portion 271a disposed in the free space (e.g., the free space S in FIG. 7). According to an embodiment, the acoustic housing 270 (e.g., the first acoustic housing 271) may have at least a portion 271a disposed adjacent to a portion on which the at least one air hole 283a is disposed among the (1-3)th lateral surface 211c.

According to an embodiment, the second acoustic housing 272 may be coupled to at least a portion of the first acoustic housing 271. According to an embodiment, the second acoustic housing 272 may be made of a metal material but is not limited thereto. According to an embodiment, the second acoustic housing 272 may be configured to cover the sound output module disposed inside the first acoustic housing 271.

According to an embodiment, the first acoustic housing 271 may be configured through injection molding together with the second acoustic housing 272, but is not limited thereto.

According to an embodiment, the third acoustic housing 273 may be coupled to the first acoustic housing 271. According to an embodiment, the third acoustic housing 273 may be coupled to the other surface (e.g., the surface facing the -Z direction in FIG. 4) of the first plate (e.g., the first plate 213 in FIG. 4). According to an embodiment, the third acoustic housing 273 may include a coupling structure (e.g., a structure for bolting coupling) to be fixed to the first plate. According to an embodiment, the third acoustic housing 273 may be made of a non-metal material (e.g., polymer) but is not limited thereto.

According to an embodiment, the electronic device (e.g., the electronic device 101 of FIGS. 1 to 7) may further include a connection board 245. According to an embodiment, the connection board 245 may include one end disposed inside the first acoustic housing 271 and the other end disposed outside the first acoustic housing 271.

According to an embodiment, the connection board 245 may be electrically connected to the sound output module (e.g., the sound output module 276 in FIG. 10) disposed inside the first acoustic housing 271. According to an embodiment, the connection board 245 may include the other end electrically connected to the first printed circuit board (e.g., the first printed circuit board 241 in FIG. 4). According to an embodiment, the connection board 245 may include a terminal 245a to be physically and/or electrically connected to the first printed circuit board 241.

Referring to FIG. 9, at least a portion of the first waterproof member 261 (e.g., the first waterproof member 261 in FIG. 5) may be coupled (or adhered) to a portion

(e.g., a portion facing the +Z direction in FIG. 4 or a portion facing the +Z direction in FIG. 9) facing the first display area (e.g., the first display area A1 in FIG. 4) among the non-metal area 214 of the first housing 210.

According to an embodiment, in the electronic device 101, a gap P may be configured by the first waterproof member 261 and the inner wall of the (1-3)th lateral surface 211c spaced apart from each other.

According to an embodiment, the air hole 283b may extend from the outer wall of the (1-3)th lateral surface 211c to at least a portion of the non-metal area 214. According to an embodiment, a through-hole 285 may be configured on at least a portion of the non-metal area 214 disposed on an area corresponding to the gap P. According to an embodiment, the through-hole 285 may be defined and interpreted as a hole (or space) extending from the at least one air hole 283b. According to an embodiment, the disclosure is not limited to the case in which the portion on which the through-hole 285 is configured by the non-metal area 214 and the portion on which the through-hole 285 is disposed may also be configured by the metal area (e.g., at least a portion of the metal area that configures the first plate 213 in FIGS. 4 to 6).

According to the illustrated embodiment, it is illustrated that the multiple air holes 283b are connected to one through-hole 285, but is not limited thereto, and the multiple air holes 283b may be connected to multiple through-holes 285, respectively.

According to an embodiment, liquid and/or foreign substance introduced from outside of the electronic device 101 through multiple air holes 283b may be introduced to the gap P through the through-hole 285. According to an embodiment, the gap P is an area (or space) disposed on an outer side of the first waterproof member 261 so that the introduced external liquid and/or foreign substance may be prevented from being introduced to the electrical components disposed in the first waterproof area (e.g., the first waterproof area 261-1 in FIG. 5) of the first waterproof member 261.

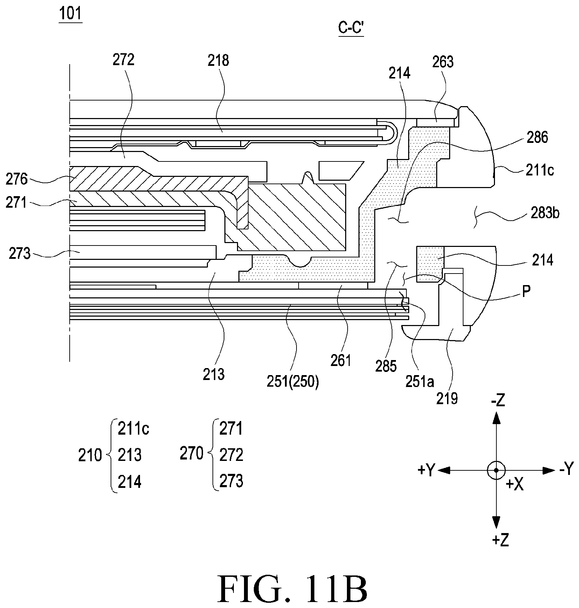

FIG. 10 is a sectional view illustrating a status in which a first housing, an acoustic housing, and a sealing member are coupled according to an embodiment of the disclosure. FIG. 11A is a sectional view taken along line B-B' of FIG. 10 according to an embodiment of the disclosure. FIG. 11B is a sectional view taken along line C-C' of FIG. 10 according to an embodiment of the disclosure.

The embodiments in FIGS. 10 to 11B may be combined with the embodiments in FIGS. 1 to 9.

Referring to FIGS. 10 to 11B, the electronic device 101 (e.g., the electronic device 101 in FIGS. 1 to 9) may include a first housing 210, a first rear cover 215, a sub-display 218, a protection member 219, a display 250, a first waterproof member 261, a third waterproof member 263, an acoustic housing 270, a sound output module 276, and a sealing member 290.

The configuration of the first housing 210 in FIGS. 10 to 11B may be entirely or partially identical to that of the first housing 210 in FIGS. 2 to 9. The configuration of the first rear cover 215 in FIGS. 10 to 11B may be entirely or partially identical to that of the first rear cover 215 in FIGS. 2 to 4. The configuration of the sub-display 218 in FIGS. 10 to 11B may be entirely or partially identical to that of the sub-display 218 in FIG. 4. The configuration of the display 250 in FIGS. 10 to 11B may be entirely or partially identical to that of the foldable display 250 in FIGS. 2 to 4. The configuration of the first waterproof member 261 in FIGS. 10 to 11B may be entirely or partially identical to that of the first waterproof member 261 in FIGS. 4 to 5. The configuration of the third waterproof member 263 in FIGS. 10 to 11B may be entirely or partially identical to that of the third waterproof member 263 in FIG. 4. The configuration of the acoustic housing 270 and the sealing member 290 in FIGS. 10 to 11B may be partially or entirely identical to that of the acoustic housing 270 and the sealing member 290 in FIGS. 6 to 9. The configuration of the sound output module 276 in FIGS. 10 to 11B may be entirely or partially identical to that of the sound output module 155 in FIG. 1.

Referring to FIG. 10, the first housing 210 may include a (1-1)th lateral surface 211a and a (1-3)th lateral surface 211c. According to an embodiment, a (1-2)th housing hole 283 may be configured on the (1-3)th lateral surface 211c.

According to an embodiment, multiple (1-2)th housing holes 283 may be disposed between as pair of (1-2) segment parts 214b. The pair of (1-2)th segment parts 214b may correspond to at least a portion of the non-metal area 214 configuring the first housing 210. According to an embodiment, multiple (1-2)th housing holes 283 may include at least one sound emission hole 283a and at least one air hole 283b.

According to an embodiment, the acoustic housing 270 may include a conduit 274 configured inside the acoustic housing 270. According to an embodiment, the conduit 274 may be defined and interpreted as a conduit extending from the sound output module 276 disposed inside the acoustic housing 270 to the sound emission hole 283a. For example, the conduit 274 may be defined and interpreted as a conduit extending from the sound output module 276 disposed inside the acoustic housing 270 towards the sound emission hole 283a. According to an embodiment, a sound output from the sound output module 276 may be output to the outside of the electronic device 101 through the conduit 274 and the sound emission hole 283a.

According to an embodiment, the at least one sound emission hole 283a may be connected to the conduit 274 of the acoustic housing 270. According to an embodiment, the at least one air hole 283c may be connected to a through-hole (e.g., the through-hole 285 in FIG. 9 or the through-hole 285 in FIG. 11B). According to an embodiment, the at least one air hole 283c may be connected to the through-hole through a connection portion 286.

According to an embodiment, the sealing member 290 may include a body member 291 and a mesh member 292. According to an embodiment, the sealing member 290 may be disposed to cover the conduit 274 and the at least one sound emission hole 283a. According to an embodiment, the sealing member 290 may be disposed between the acoustic housing 270 and the (1-3)th lateral surface 211c.

According to an embodiment, the sound output module 276 may be disposed in an inner space of the first acoustic housing 271. According to an embodiment, a sound generated from the sound output module 276 may be output to the outside of the electronic device 101 through the conduit 274, the mesh member 292, and the at least one sound emission hole 283a.

According to an embodiment, the first acoustic housing 271 may have at least a portion 271a disposed adjacent to one side (e.g., a portion facing the +X direction in FIG. 10) of the sealing member 290. According to an embodiment, the first acoustic housing 271 may have at least a portion 271a disposed in a free space (e.g., the free space S in FIG. 7) of the electronic device 101.

Referring to FIG. 11A, the acoustic housing 270 may include a first acoustic housing 271, a second acoustic housing 272, and a third acoustic housing 273.

According to an embodiment, the sound output module 276 may be disposed between the first acoustic housing 271 and the second acoustic housing 272.

According to an embodiment, the third acoustic housing 273 may be coupled to the first acoustic housing 271. According to an embodiment, the third acoustic housing 273 is coupled to the other surface (e.g., the surface facing the -Z direction in FIG. 11A) of the first plate 213 so that the acoustic housing 270 may be fixed to the first plate 213.

According to an embodiment, the first display area 251 of the display 250 may be disposed on one surface (e.g., the surface facing the +Z direction in FIG. 11A) of the first plate 213. According to an embodiment, the first display area 251 may be coupled to the one surface of the first plate 213 through the first waterproof member 261 made of a waterproof tape.

According to an embodiment, the protection member 219 may be coupled to the first housing 210. According to an embodiment, the protection member 219 may be coupled to at least a portion of the inner wall of the (1-3)th lateral surface 211c of the first housing 210. According to an embodiment, the protection member 219 may be spaced apart from an edge of the flexible display 250. According to an embodiment, the protection member 219 may be configured to protect at least a portion of the flexible display 250. According to an embodiment, the protection member 219 may be spaced apart from an edge of the first display area 251. According to an embodiment, the protection member 219 may protect the first display area 251 from external impact.

According to an embodiment, the sealing member 290 may include the body member 291 coupled to the inner wall of the (1-3)th lateral surface 211c and the first acoustic housing 271 and the mesh member 292 disposed on an opening formed through the body member 291.

According to an embodiment, the mesh member 292 may be made of a breathable mesh and may allow propagation of a sound generated from the sound output module 276 to the sound emission hole 283a via the conduit 274. For example, vibration of the sound generated from the sound output module 276 may be propagated (or output) to the outside of the electronic device 101 through the conduit 274, the mesh member 292, and the sound emission hole 283a. According to an embodiment, the mesh member 292 may block liquid and/or foreign substances of the outside of the electronic device 101 from being introduced to the conduit 274 (or the inside of the electronic device 101) through the sound emission hole 283a.

According to an embodiment, the first rear cover 215 may be coupled to the first housing 210 (or at least a portion of the (1-3)th lateral surface 211c) through the third waterproof member 263.

According to an embodiment, the sub-display 218 may be disposed between the acoustic housing 270 and the first rear cover 215.

According to an embodiment, the conduit 274, the mesh member 292, and the sound emission hole 283a may configure a passage L1 of the sound output from the sound output module 276 to the outside of the electronic device 101.

Referring to FIG. 11B, the at least one air hole 283b may be connected to the through-hole 285. According to an embodiment, the at least one air hole 283b may correspond to a hole extending through the outer wall of the (1-3)th lateral surface 211c toward the inside (e.g., the +Y direction in FIG. 11B) of the electronic device 101. According to an embodiment, the through-hole 285 may correspond to a hole extending through a portion of the non-metal area 214 configuring the first housing 210 facing the display 250 toward the sub-display 218.

According to an embodiment, the connection portion 286 may be configured to connect the at least one air hole 283b and the through-hole 285. According to an embodiment, the at least one air hole 283b, the connection portion 286, and the through-hole 285 may be defined and interpreted as one configuration and may be configured as a hole having an overall bent shape.

According to an embodiment, the through-hole 285 may face a gap P configured between the first waterproof member 261 and the inner wall of the (1-3)th lateral surface 211c. According to an embodiment, the gap P may be defined and interpreted as a space configured between the first waterproof member 261 and the protection member 219. According to an embodiment, the gap P may be defined and interpreted as a non-waterproof area P.

According to an embodiment, the through-hole 285 may face an edge 251a of the first display area 251. According to an embodiment, the through-hole 285 may be formed through an area (e.g., at least a partial area of the non-metal area 214) adjacent to the edge 251a of the flexible display 250 (e.g., the first display area 251) of the first housing 210.

According to an embodiment, external liquid and/or foreign substances introduced from the outside of the electronic device 101 through the at least one air hole 283b may be introduced to the gap P through the through-hole 285.

According to an embodiment, the external liquid and/or foreign substances introduced to the gap P may be blocked by the first waterproof member 261 and may not be introduced to electrical components (e.g., the first battery 251 or the first printed circuit board 241 in FIG. 4) arranged on the first waterproof area (e.g., the first waterproof area 261-1 in FIG. 5) of the first waterproof member 261. According to an embodiment, the external liquid and/or foreign substances introduced to the gap P may be discharged to the outside of the electronic device 101 through a spaced portion between the protection member 219 and the edge 251a of the first display area 251.

A foldable electronic device may include a foldable flexible display disposed on the entire area of a housing structure and may include multiple housing structure to support same. Therefore, the foldable electronic device may have various components disposed and/or mounted on each of the multiple housing structures and require a waterproof structure configured to restrict (or prevent) external foreign substances and/or liquid from being introduced to the various components.

As such, the foldable electronic device includes various components and the waterproof structure, it may be difficult to secure a sufficient inner space to mount the components of the foldable electronic device.

The foldable electronic device may include a sound output module which may output a sound signal to outside the electronic device. The sound output module requires a resonance space within the electronic device where vibration generated by the sound output module may resonate to ensure ample volume in a low-frequency range. As described above, the foldable electronic device may have difficulty securing a resonance space within the foldable electronic device for the audio output module.

An embodiment of the disclosure may provide a foldable electronic device which may block an external foreign substance from outside the electronic device from being introduced to the electronic device.

An embodiment of the disclosure may provide a foldable electronic device which may secure a volume of an acoustic housing for the sound performance of a sound output module inside the electronic device.

The foldable electronic device according to an embodiment of the disclosure may include a (1-1)th housing hole and a (1-2)th housing hole arranged therein, thus improving aesthetics.

The foldable electronic device according to an embodiment of the disclosure may secure an additional space for an acoustic housing within the inside of the electronic device, thus improving the performance of a sound output from a sound output module.

It will be appreciated by a person skilled in the art that effects which may be achieved from the disclosure are not limited to the effects described above and other effects that are not described above will be clearly understood from the following detailed description.

According to an embodiment of the disclosure, an electronic device (e.g., the electronic device 101 in FIGS. 1 to 11B) may include a first housing (e.g., the first housing 210 in FIGS. 2 to 11B), a second housing (e.g., the second housing 220 in FIGS. 2 to 5), a hinge structure (e.g., the hinge structure 231 in FIG. 4), a flexible display (e.g., the display 250 in FIGS. 2 to 4), a first waterproof member (e.g., the first waterproof member 261 in FIGS. 4 to 5), an acoustic housing (e.g., the acoustic housing 270 in FIG. 4 or the acoustic housing 270 in FIGS. 6 to 11B), and a sound output module (e.g., the sound output module 155 in FIG. 1 or the sound output module 276 in FIGS. 10 to 11B). The first housing may include a first lateral surface (e.g., the (1-2)th lateral surface 211b in FIGS. 2 to 5) and a second lateral surface (e.g., the (1-3)th lateral surface 211c in FIGS. 2 to 11B). A plurality of first holes (e.g., the first housing hole 281 in FIGS. 2 to 3) may be formed in the first lateral surface. A plurality of second holes (e.g., the second housing hole 283 in FIGS. 2 to 3 or the second housing hole 283b in FIGS. 6 to 11B) may be formed in the second lateral surface. The hinge structure may rotatably connect the first housing and the second housing. The flexible display may be disposed on the first housing and the second housing. The first waterproof member may be disposed between the first housing and the flexible display. The acoustic housing may be disposed in the first housing. The acoustic housing may include a conduit (e.g., the conduit 274 in FIG. 10) extending to at least a portion of the plurality of second holes. The sound output module may be disposed in the acoustic housing. The sound output module may be configured to output a sound to the outside of the electronic device through at least a portion of the conduit and the plurality of second holes. The plurality of second holes may include at least one sound emission hole (e.g., the sound emission hole 283a in FIGS. 6 to 11B) and at least one air hole (e.g., the air hole 283b in FIGS. 6 to 11B). The at least one sound emission hole may extend from the second lateral surface to the conduit. The at least one air hole may be disposed adjacent to the at least one sound emission hole. The at least one air hole may include at least one air hole 283b extending from the second lateral surface toward a gap (e.g., the gap P in FIG. 10 or 11B) disposed between the first waterproof member and the second lateral surface.

According to an embodiment, the electronic device may further include a sealing member (e.g., the sealing member 290 in FIGS. 6 to 11B) disposed between the acoustic housing and the second lateral surface.

According to an embodiment, the sealing member may be configured to cover the conduit and the at least one sound emission hole.

According to an embodiment, the sealing member may include a body member (e.g., the body member 291 in FIGS. 6 to 11B) and a mesh member (e.g., the mesh member 292 in FIGS. 6 to 11B). The body member may be coupled to the acoustic housing and the second lateral surface. The mesh member may be disposed in an opening formed through the body member.

According to an embodiment, at least a portion (e.g., 271a in FIG. 6 or 8) of the acoustic housing may be disposed adjacent to a portion of the second lateral surface, in which the at least one air hole is formed.

According to an embodiment, the at least one air hole may be connected to a through-hole (e.g., the through-hole 285 in FIG. 9 or the through-hole 285 in FIG. 11B) formed in a portion of the first housing, corresponding to the gap.

According to an embodiment, the through-hole may be formed in an area of the first housing, adjacent to an edge (e.g., the edge 251a of the first display area 251 in FIG. 10) of the flexible display.

According to an embodiment, a protection member (e.g., the protection member 219 in FIGS. 11A to 11B) coupled to the first housing and configured to protect the flexible display may be further included.

According to an embodiment, the acoustic housing may include a first acoustic housing (e.g., the first acoustic housing 271 in FIG. 8 or FIGS. 11A to 11B), a second acoustic housing (e.g., the second acoustic housing 272 in FIG. 8 or FIGS. 11A to 11B), and a third acoustic housing (e.g., the third acoustic housing 273 in FIG. 8 or FIGS. 11A to 11B). The sound output module may be disposed in the first acoustic housing. The conduit may be formed in the first acoustic housing. The second acoustic housing may be coupled to the first acoustic housing. The second acoustic housing may be configured to cover the sound output module. The third acoustic housing may be coupled to the first acoustic housing. The third acoustic housing may be fixed to the first housing.

According to an embodiment, the number of the plurality of second holes may be identical to that of the plurality of first holes.

According to an embodiment, the plurality of second holes may be arranged between a pair of segment parts (e.g., the pair of (1-2)th segments parts 214b in FIG. 2 or 6) arranged on the second lateral surface.

According to an embodiment, a first printed circuit board (e.g., the first printed circuit board 241 in FIG. 4) disposed in a first waterproof area (e.g., the first waterproof area 261-1 in FIG. 6) configured by the first waterproof member may be further included.

According to an embodiment, a connection board (e.g., the connection board 245 in FIG. 8) configured to electrically connect the sound output module and the first printed circuit board may be further included.

According to an embodiment, the first lateral surface and the second lateral surface may be arranged parallel with each other. The plurality of first holes and the plurality of second holes may be arranged to overlap each other in the longitudinal direction (e.g., the Y-axis direction in FIG. 4) of the electronic device.

According to an embodiment, the plurality of second holes may be arranged on a straight line.

According to an embodiment of the disclosure, an electronic device (e.g., the electronic device 101 in FIGS. 1 to 11B) may include a first housing (e.g., the first housing 210 in FIGS. 2 to 11B), a second housing (e.g., the second housing 220 in FIGS. 2 to 5), a hinge structure (e.g., the hinge structure 231 in FIG. 4), a display (e.g., the display 250 in FIGS. 2 to 4), a first waterproof member (e.g., the first waterproof member 261 in FIGS. 4 to 5), an acoustic housing (e.g., the acoustic housing 270 in FIG. 4 or the acoustic housing 270 in FIGS. 6 to 11B), a sound output module (e.g., the sound output module 155 in FIG. 1 or the sound output module 276 in FIGS. 10 to 11B), and a sealing member (e.g., the sealing member 290 in FIGS. 6 to 11B). The first housing may include a lateral surface (e.g., the (1-3)th lateral surface 211c in FIGS. 2 to 11B). A plurality of housing holes (e.g., the second housing hole 283 in FIGS. 2 to 3 or the second housing hole 283b in FIG. 6 to 11B) may be formed in the lateral surface. The hinge structure may rotatably connect the first housing and the second housing. The display may include a first display area (e.g., the first display area 251 in FIGS. 2 to 4), a second display area (e.g., the second display area 252 in FIGS. 2 to 4), and a folding area (e.g., the folding area 253 in FIGS. 2 to 4). The first display area may be disposed in the first housing. The second display area may be disposed in the second housing. The folding area may connect the first display area and the second display area. The first waterproof member may be disposed between the first housing and the first display area. The first waterproof member may configure a first waterproof area (e.g., the first waterproof area 261-1 in FIG. 6). The acoustic housing may be disposed in the first housing. The acoustic housing may include a conduit (e.g., the conduit 274 in FIG. 10) extending to at least a portion of the plurality of housing holes. The sound output module may be disposed in the acoustic housing. The sound output module may be configured to output a sound to the outside of the electronic device through at least a portion of the conduit and the plurality of housing holes. The sealing member may be disposed between the acoustic housing and the lateral surface. The plurality of housing holes may include at least one sound emission hole (e.g., the sound emission hole 283a in FIGS. 6 to 11B) and at least one air hole (e.g., the air hole 283b in FIGS. 6 to 11B). The at least one sound emission hole may extend from the lateral surface to the conduit. The at least one air hole may be disposed adjacent to the at least one sound emission hole. The at least one air hole may include at least one air hole 283b extending from the lateral surface toward a non-waterproof area (e.g., the gap P in FIG. 10 or 11B) disposed between the first waterproof member and the lateral surface.

According to an embodiment, the sealing member may include a body member (e.g., the body member 291 in FIGS. 6 to 11B) and a mesh member (e.g., the mesh member 292 in FIGS. 6 to 11B). The body member may be coupled to the acoustic housing and the second lateral surface. The mesh member may be disposed in an opening formed through the body member.

According to an embodiment, the sealing member may be configured to cover the conduit and the at least one sound emission hole.

According to an embodiment, the plurality of housing holes may be arranged on a straight line, based on the width direction of the first housing.

According to an embodiment, the plurality of housing holes may be arranged between a pair of segment parts (e.g., the pair of (1-2)th segments parts 214b in FIG. 2 or 6) arranged on the lateral surface.

## Claims

1. An electronic device (101) comprising:
a first housing (210) including a first lateral surface (211b), in which a plurality of first holes (281) are formed, and a second lateral surface (211c), in which a plurality of second holes (283) are formed;
a second housing (220);
a hinge structure (231) configured to rotatably connect the first housing and the second housing;
a flexible display (250) disposed on the first housing and the second housing;
a first waterproof member (261) disposed between the first housing and the flexible display;
an acoustic housing (270) disposed in the first housing and including a conduit (274) extending to at least a portion of the plurality of second holes; and
a sound output module (155, 276) disposed in the acoustic housing and configured to output a sound to the outside of the electronic device through at least a portion of the plurality of second holes and the conduit,
wherein the plurality of second holes include:
at least one sound emission hole (283a) extending from the second lateral surface to the conduit; and
at least one air hole (283b) disposed adjacent to the at least one sound emission hole and extending from the second lateral surface toward a gap (P) defined between the first waterproof member and the second lateral surface.

2. The electronic device of claim 1, further comprising a sealing member (290) disposed between the acoustic housing and the second lateral surface.

3. The electronic device of one of claims 1 and 2, wherein the sealing member is configured to cover the conduit and the at least one sound emission hole.

4. The electronic device of one of claims 1 to 3, wherein the sealing member includes:
a body member (291) coupled to the acoustic housing and the second lateral surface; and
a mesh member (292) disposed in an opening formed in the body member.

5. The electronic device of one of claims 1 to 4, wherein at least a portion (271a) of the acoustic housing is disposed adjacent to a portion of the second lateral surface, in which the at least one air hole is formed.

6. The electronic device of one of claims 1 to 5, wherein the at least one air hole is connected to a through-hole (285) formed in a portion of the first housing corresponding to the gap.

7. The electronic device of one of claims 1 to 6, wherein the through-hole is formed in an area of the first housing, adjacent to an edge (251a) of the flexible display.

8. The electronic device of one of claims 1 to 7, further comprising a protection member (219) coupled to the first housing and configured to protect at least a portion of the flexible display.

9. The electronic device of one of claims 1 to 8, wherein the acoustic housing includes:
a first acoustic housing (271), in which the sound output module is disposed and the conduit is formed;
a second acoustic housing (272) coupled to the first acoustic housing and configured to cover the sound output module; and
a third acoustic housing (273) coupled to the first acoustic housing and fixed to the first housing.

10. The electronic device of one of claims 1 to 9, wherein the number of the plurality of second holes is identical to the number of the plurality of first holes.

11. The electronic device of one of claims 1 to 10, wherein the plurality of second holes are arranged between a pair of segment parts (214b) formed at the second lateral surface.

12. The electronic device of one of claims 1 to 11, further comprising a first printed circuit board (241) disposed in a first waterproof area (261-1) formed by the first waterproof member.

13. The electronic device of one of claims 1 to 12, further comprising a connection board (245) configured to electrically connect the sound output module and the first printed circuit board.

14. The electronic device of one of claims 1 to 13, wherein the first lateral surface and the second lateral surface are arranged parallel to each other, and
wherein the plurality of first holes and the plurality of second holes are arranged to overlap each other with respect to a longitudinal direction of the electronic device.

15. The electronic device of one of claims 1 to 14, wherein the plurality of second holes are arranged on a straight line.

## Patentansprüche

1. Elektronische Vorrichtung (101), umfassend:
ein erstes Gehäuse (210), das eine erste Seitenfläche (211b), in der eine Vielzahl von ersten Löchern (281) gebildet ist, und eine zweite Seitenfläche (211c), in der eine Vielzahl von zweiten Löchern (283) gebildet ist, beinhaltet;
ein zweites Gehäuse (220);
eine Scharnierstruktur (231), die dazu konfiguriert ist, das erste Gehäuse und das zweite Gehäuse drehend zu verbinden;
eine flexible Anzeige (250), die an dem ersten Gehäuse und dem zweiten Gehäuse vorgesehen ist;
ein erstes wasserdichtes Element (261), das zwischen dem ersten Gehäuse und der flexiblen Anzeige vorgesehen ist;
ein Akustikgehäuse (270), das in dem ersten Gehäuse vorgesehen ist und eine Leitung (274) beinhaltet, die sich zu zumindest einem Abschnitt der Vielzahl von zweiten Löchern erstreckt; und
ein Tonausgabemodul (155, 276), das in dem Akustikgehäuse vorgesehen und dazu konfiguriert ist, einen Ton an die Außenseite der elektronischen Vorrichtung durch zumindest einen Abschnitt der Vielzahl von zweiten Löchern und die Leitung auszugeben,
wobei die Vielzahl von zweiten Löchern Folgendes beinhaltet:
zumindest ein Tonemissionsloch (283a), das sich von der zweiten Seitenfläche zu der Leitung erstreckt; und
zumindest ein Luftloch (283b), das benachbart zu dem zumindest einen Tonemissionsloch vorgesehen ist und sich von der zweiten Seitenfläche zu einem Spalt (P) erstreckt, der zwischen dem ersten wasserdichten Element und der zweiten Seitenfläche definiert ist.

2. Elektronische Vorrichtung nach Anspruch 1, ferner umfassend ein Dichtungselement (290), das zwischen dem Akustikgehäuse und der zweiten Seitenfläche vorgesehen ist.

3. Elektronische Vorrichtung nach einem der Ansprüche 1 und 2, wobei das Dichtungselement dazu konfiguriert ist, die Leitung und das zumindest eine Tonemissionsloch abzudecken.

4. Elektronische Vorrichtung nach einem der Ansprüche 1 bis 3, wobei das Dichtungselement Folgendes beinhaltet:
ein Körperelement (291), das an das Akustikgehäuse und die zweite Seitenfläche gekoppelt ist; und
ein Netzelement (292), das in einer Öffnung vorgesehen ist, die in dem Körperelement gebildet ist.

5. Elektronische Vorrichtung nach einem der Ansprüche 1 bis 4, wobei zumindest ein Abschnitt (271a) des Akustikgehäuses benachbart zu einem Abschnitt der zweiten Seitenfläche vorgesehen ist, in dem das zumindest eine Luftloch gebildet ist.

6. Elektronische Vorrichtung nach einem der Ansprüche 1 bis 5, wobei das zumindest eine Luftloch mit einem Durchgangsloch (285) verbunden ist, das in einem Abschnitt des ersten Gehäuses entsprechend dem Spalt gebildet ist.

7. Elektronische Vorrichtung nach einem der Ansprüche 1 bis 6, wobei das Durchgangsloch in einem Bereich des ersten Gehäuses benachbart zu einer Kante (251a) der flexiblen Anzeige gebildet ist.

8. Elektronische Vorrichtung nach einem der Ansprüche 1 bis 7, ferner umfassend ein Schutzelement (219), das an das erste Gehäuse gekoppelt und dazu konfiguriert ist, zumindest einen Abschnitt der flexiblen Anzeige zu schützen.

9. Elektronische Vorrichtung nach einem der Ansprüche 1 bis 8, wobei das Akustikgehäuse Folgendes beinhaltet:
ein erstes Akustikgehäuse (271), in dem das Tonausgabemodul vorgesehen ist und die Leitung gebildet ist;
ein zweites Akustikgehäuse (272), das an das erste Akustikgehäuse gekoppelt und dazu konfiguriert ist, das Tonausgabemodul abzudecken; und
ein drittes Akustikgehäuse (273), das an das erste Akustikgehäuse gekoppelt und an dem ersten Gehäuse befestigt ist.

10. Elektronische Vorrichtung nach einem der Ansprüche 1 bis 9, wobei die Anzahl der Vielzahl von zweiten Löchern identisch mit der Anzahl der Vielzahl von ersten Löchern ist.

11. Elektronische Vorrichtung nach einem der Ansprüche 1 bis 10, wobei die Vielzahl von zweiten Löchern zwischen einem Paar von Segmentteilen (214b) angeordnet ist, das an der zweiten Seitenfläche gebildet ist.

12. Elektronische Vorrichtung nach einem der Ansprüche 1 bis 11, ferner umfassend eine erste Leiterplatte (241), die in einem ersten wasserdichten Bereich (261-1) vorgesehen ist, der durch das erste wasserdichte Element gebildet ist.

13. Elektronische Vorrichtung nach einem der Ansprüche 1 bis 12, ferner umfassend eine Verbindungsplatte (245), die dazu konfiguriert ist, das Tonausgabemodul und die erste Leiterplatte elektrisch zu verbinden.

14. Elektronische Vorrichtung nach einem der Ansprüche 1 bis 13, wobei die erste Seitenfläche und die zweite Seitenfläche parallel zueinander angeordnet sind, und
wobei die Vielzahl von ersten Löchern und die Vielzahl von zweiten Löchern angeordnet sind, um einander in Bezug auf eine Längsrichtung der elektronischen Vorrichtung zu überlappen.

15. Elektronische Vorrichtung nach einem der Ansprüche 1 bis 14, wobei die Vielzahl von zweiten Löchern auf einer geraden Linie angeordnet ist.

## Revendications

1. Dispositif électronique (101) comprenant :
un premier boîtier (210) comprenant une première surface latérale (211b), dans laquelle une pluralité de premiers trous (281) sont formés, et une seconde surface latérale (211c), dans laquelle une pluralité de seconds trous (283) sont formés ;
un second boîtier (220) ;
une structure de charnière (231) conçue pour raccorder de manière rotative le premier boîtier et le second boîtier ;
un affichage souple (250) disposé sur le premier boîtier et le second boîtier ;
un premier élément étanche (261) disposé entre le premier boîtier et l'affichage souple ;
un boîtier acoustique (270) disposé dans le premier boîtier et comprenant un conduit (274) s'étendant jusqu'à au moins une partie de la pluralité de seconds trous ; et
un module de sortie sonore (155, 276) disposé dans le boîtier acoustique et configuré pour sortir un son vers l'extérieur du dispositif électronique à travers au moins une partie de la pluralité de seconds trous et le conduit,
dans lequel la pluralité de seconds trous comprennent :
au moins un trou d'émission sonore (283a) s'étendant à partir de la seconde surface latérale jusqu'au conduit ; et
au moins un trou d'air (283b) disposé de manière adjacente à l'au moins un trou d'émission sonore et s'étendant à partir de la seconde surface latérale vers un espace (P) défini entre le premier élément étanche et la seconde surface latérale.

2. Dispositif électronique de la revendication 1, comprenant en outre un élément d'étanchéité (290) disposé entre le boîtier acoustique et la seconde surface latérale.

3. Dispositif électronique de l'une des revendications 1 et 2, dans lequel l'élément d'étanchéité est configuré pour couvrir le conduit et l'au moins un trou d'émission sonore.

4. Dispositif électronique de l'une des revendications 1 à 3, dans lequel l'élément d'étanchéité comprend :
un élément de corps (291) couplé au boîtier acoustique et à la seconde surface latérale ; et
un élément à mailles (292) disposé dans une ouverture formée dans l'élément de corps.

5. Dispositif électronique de l'une des revendications 1 à 4, dans lequel au moins une partie (271a) du boîtier acoustique est disposée adjacente à une partie de la seconde surface latérale, dans laquelle l'au moins un trou d'air est formé.

6. Dispositif électronique de l'une des revendications 1 à 5, dans lequel l'au moins un trou d'air est raccordé à un trou traversant (285) formé dans une partie du premier boîtier correspondant à l'espace.

7. Dispositif électronique de l'une des revendications 1 à 6, dans lequel le trou traversant est formé dans une zone du premier boîtier, adjacente à un bord (251a) de l'affichage souple.

8. Dispositif électronique de l'une des revendications 1 à 7, comprenant en outre un élément de protection (219) couplé au premier boîtier et configuré pour protéger au moins une partie de l'affichage souple.

9. Dispositif électronique de l'une des revendications 1 à 8, dans lequel le boîtier acoustique comprend :
un premier boîtier acoustique (271), dans lequel le module de sortie sonore est disposé et le conduit est formé ;
un deuxième boîtier acoustique (272) couplé au premier boîtier acoustique et conçu pour recouvrir le module de sortie sonore ; et
un troisième boîtier acoustique (273) couplé au premier boîtier acoustique et fixé au premier boîtier.

10. Dispositif électronique de l'une des revendications 1 à 9, dans lequel le nombre de la pluralité de seconds trous est identique au nombre de la pluralité de premiers trous.

11. Dispositif électronique de l'une des revendications 1 à 10, dans lequel la pluralité de seconds trous sont agencés entre une paire de parties de segment (214b) formées au niveau de la seconde surface latérale.

12. Dispositif électronique de l'une des revendications 1 à 11, comprenant en outre une première carte de circuit imprimé (241) disposée dans une première zone étanche (261-1) formée par le premier élément étanche.

13. Dispositif électronique de l'une des revendications 1 à 12, comprenant en outre une carte de connexion (245) configurée pour connecter électriquement le module de sortie sonore et la première carte de circuit imprimé.

14. Dispositif électronique de l'une des revendications 1 à 13, dans lequel la première surface latérale et la seconde surface latérale sont disposées parallèlement l'une à l'autre, et
dans lequel la pluralité de premiers trous et la pluralité de seconds trous sont agencés pour se superposer les uns les autres par rapport à une direction longitudinale du dispositif électronique.

15. Dispositif électronique de l'une des revendications 1 à 14, dans lequel la pluralité de seconds trous sont agencés sur une ligne droite.
